(19) Europäisches Patentamt

European Patent Office

Office européen des brevets

(11) **EP 1 537 538 B1**

(12) **EUROPÄISCHE PATENTSCHRIFT**

(45) Veröffentlichungstag und Bekanntmachung des Hinweises auf die Patenterteilung:
**11.01.2006 Patentblatt 2006/02**

(21) Anmeldenummer: 03798898.7

(22) Anmeldetag: **09.09.2003**

(51) Int Cl.:
*G06T 15/20* *(2006.01)*

(86) Internationale Anmeldenummer:
**PCT/EP2003/010017**

(87) Internationale Veröffentlichungsnummer:
**WO 2004/032062 (15.04.2004 Gazette 2004/16)**

(54) **VERFAHREN ZUR FESTLEGUNG VON GEWICHTUNGSFAKTOREN FÜR DIE FARBBERECHNUNG EINES FARBWERTS VON TEXELN FÜR EINEN FOOTPRINT**

METHOD FOR DETERMINATION OF WEIGHTING FACTORS FOR THE COLOUR CALCULATION OF A COLOUR VALUE FOR TEXELS IN A FOOTPRINT

PROCEDE DE DETERMINATION DE FACTEURS DE PONDERATION POUR LE CALCUL D'UNE VALEUR DE COULEUR DE TEXELS POUR UNE EMPREINTE

(84) Benannte Vertragsstaaten:
**AT BE BG CH CY CZ DE DK EE ES FI FR GB GR HU IE IT LI LU MC NL PT RO SE SI SK TR**

(30) Priorität: **13.09.2002 DE 10242640**

(43) Veröffentlichungstag der Anmeldung:
**08.06.2005 Patentblatt 2005/23**

(73) Patentinhaber:
• **Koninklijke Philips Electronics N.V.**
  **5621 BA Eindhoven (NL)**
  Benannte Vertragsstaaten:
  **AT BE BG CH CY CZ DK EE ES FI FR GB GR HU IE LI LU MC NL PT RO SE SI SK TR**
• **Philips Intellectual Property & Standards GmbH**
  **20099 Hamburg (DE)**
  Benannte Vertragsstaaten:
  **DE**

(72) Erfinder:
• **HAAKER, Thomas**
  **82319 Starnberg (DE)**
• **RICHTER, Roland**
  **c/o Philips Int.Prop.& Stand. GmbH**
  **52066 Aachen (DE)**

(74) Vertreter: **Schoppe, Fritz et al**
**Patentanwälte**
**Schoppe, Zimmermann, Stöckeler & Zinkler**
**Postfach 246**
**82043 Pullach bei München (DE)**

(56) Entgegenhaltungen:
**US-A- 6 097 397         US-B1- 6 292 193**

• **EWINS J P ET AL: "Implementing an anisotropic texture filter" COMPUTERS AND GRAPHICS, PERGAMON PRESS LTD. OXFORD, GB, Bd. 24, Nr. 2, April 2000 (2000-04), Seiten 253-267, XP004236371 ISSN: 0097-8493**
• **HECKBERT P S: "SURVEY OF TEXTURE MAPPING" IEEE COMPUTER GRAPHICS AND APPLICATIONS, IEEE INC. NEW YORK, US, Bd. 6, Nr. 11, 1. November 1986 (1986-11-01), Seiten 56-67, XP000002233 ISSN: 0272-1716**
• **FOURNIER A., FIUME E.: "Constant-Time Filtering with Space-Variant Kernels" SIGGRAPH 88 CONFERENCE, COMPUTER GRAPHICS, Bd. 22, Nr. 4, 1. - 5. August 1988, Seiten 229-238, XP002261979 Atlanta, USA**

**Beschreibung**

Die vorliegende Erfindung bezieht sich allgemein auf ein Verfahren zur Anzeige von Bildern auf einem durch einen Computer gesteuerten Rasteranzeigesystem. Insbesondere bezieht sich die vorliegende Erfindung auf einen anisotropen Filtermechanismus und eine entsprechende Vorrichtung, die erforderlich ist, um abgespeicherte, diskrete Bilder, die nachfolgend auch als Texturen bezeichnet werden, mit hoher Qualität auf der Rasteranzeige zu rekonstruieren, zu skalieren oder einer perspektivischen Projektion zu unterziehen. Insbesondere bezieht sich die vorliegende Erfindung auf ein Verfahren zur Festlegung von Gewichtungsfaktoren für die Farbberechnung eines Farbwertes von Texeln für einen Footprint.

Im Stand der Technik sind anisotrope Filterverfahren bekannt, z. B. die sogenannte Flächenabtastung "area sampling", um einem Footprint eine Textur zuzuordnen. Im Stand der Technik sind sogenannte gewichtete Flächenabtastungen als auch ungewichtete Flächenabtastungen bekannt wobei ein Nachteil der im Stand der Technik bekannten Verfahren darin besteht, dass hier bei einem Übergang zwischen einer gewichteten und einer ungewichteten Abtastung Diskontinuitäten in dem dargestellten Bild mit wahrnehmbaren Artefakten erzeugt werden.

Ein "Footprint" ist die perspektivische Projektion eines Bildelements (Pixel) eines Objekts auf eine gebogene Oberfläche. Ein "Footprint" kann eine konvexe vierseitige Darstellung sein, die das angenäherte Ergebnis der perspektivischen Projektion auf ein reguläres Texel-Gitter (Texturelement-Gitter) eines quadratischen Bildelements (Pixel) eines Objekts auf eine gebogene Oberfläche wiedergibt.

Die US-A-6,097,397 beschreibt eine anisotrope Texturabbildung und Verwendung einer Footprint-Analyse. Eine anisotrope Abbildung der Texturinformation für jedes Pixel verwendet den Footprint jedes Pixels, das von dem Bildraum in den Texturraum abgebildet wurde, um einen anisotropen Texturraumbereich zu bestimmen, der sowohl eine Länge als auch eine Breite aufweist, in dem vollständige Texel und Texelteile durch den Pixel-Footprint bedeckt sind. Ein Satz von Liniengleichungen, die einen bestimmten Pixel-Footprint charakterisieren, wird verwendet, um zu bestimmen, ob jedes Texel oder Teiltexel in der Nähe des Pixel-Footprints entweder von dem projizierten Pixel-Footprint eingeschlossen oder nicht eingeschlossen ist.

Ausgehend von diesem Stand der Technik liegt der vorliegenden Erfindung die Aufgabe zugrunde, ein verbessertes Verfahren zu schaffen, das bei einer Erzeugung von Gewichtungen für Texel eines Footprints auf einfache und schnelle Art die Bestimmung von Texeln unter den Kanten des Footprints ermöglicht.

Diese Aufgabe wird durch ein Verfahren nach Anspruch 1 gelöst.

Die vorliegende Erfindung schafft ein Verfahren zur Festlegung von Gewichtungsfaktoren für die Farbberechnung eines Farbwertes von Texeln für einen Footprint, der eine Mehrzahl von Texeln in einem Texel-Gitter überdeckt, in einem Graphiksystem, mit folgenden Schritten:

    (a) Bestimmen einer Forminformation des Footprints;

    (b) Bestimmen der Kanten des Footprints;

    (c) Annähern der im Schritt (b) bestimmten Kanten durch eine Treppenfunktion;

    (d) Bestimmen der Texel des Texel-Gitters, die durch die Treppenfunktion berührt werden; und

    (e) Bestimmen eines Gewichtungsfaktors für jedes Texel, das einen Abschnitt der Treppenfunktion enthält, abhängig von der durch den Footprint überdeckten Teilfläche des jeweiligen Texels.

Gemäß einem bevorzugten Ausführungsbeispiel wird ein durch die Treppenfunktion berührtes Texel basierend auf den Anfangspunkten und /oder Endpunkten der vertikalen Abschnitte der Treppenfunktion bestimmt.

Texeln des Texel-Gitters, die nicht durch die Treppenfunktion berührt werden und die von dem Footprint bedeckt werden, wird vorzugsweise ein einheitlicher Gewichtungsfaktor zugeordnet, wobei die Gewichtungsfaktoren für jedes Texel einer Datenstruktur zugeordnet werden.

Gemäß einem weiteren bevorzugten Ausführungsbeispiel umfaßt die Treppenfunktion für jede Kante des Footprints eine Mehrzahl von Stufen, eine Mehrzahl von horizontalen Stufenelementen und eine Mehrzahl von vertikalen Stufenelementen, wobei jede Kante eine Mehrzahl von gleichlangen, aufeinanderfolgenden Kantenabschnitten umfaßt, wobei eine horizontale Kante vorliegt, wenn die Endpunkte der Kantenabschnitte der Kante ein horizontales Stufenelement der Treppenfunktion schneiden, wobei eine vertikale Kante vorliegt, wenn die Endpunkte der Kantenabschnitte der Kante ein vertikales Stufenelement der Treppenfunktion schneiden, wobei eine horizontale Kante eine Anzahl von vertikalen Stufenelementen umfaßt, die gleich der Anzahl der Stufen der Treppenfunktion ist, wobei eine vertikale Kante eine Anzahl von vertikalen Stufenelementen umfaßt, die um eine zusätzliches vertikalen Stufenelement größer als die Anzahl der Stufen der Treppenfunktion ist, und wobei das zusätzliche vertikale Stufenelement für eine Berechnung der Gewichtungsfaktoren einer benachbarten Kante mit gleicher vertikaler Position herangezogen wird.

Gemäß einem anderen bevorzugten Ausführungsbeispiel ist dem Footprint eine Vergrößerungsverschiebung zugeordnet, wobei nach dem Schritt (a), basierend auf der Vergrößerungsverschiebung, der Footprint durch Verschieben der Kanten des Footprints nach außen um eine von der Vergrößerungsverschiebung abhängige Entfernung vergrößert wird, wobei im Schritt (b) die verschobene Kante bestimmt wird, wobei im Schritt (c) die verschobene Kante durch eine Treppenfunktion angenähert wird, und wobei im Schritt (e) ein Gewichtungsfaktor für jedes Texel, das eine verschobene Kante enthält, abhängig von der durch den vergrößerten Footprint überdeckten Teilfläche des jeweiligen Texels bestimmt wird.

Der Footprint wird dadurch vergrößert, dass die Kantenendpunkte um eine durch die Vergrößerungsverschiebung festgelegte Entfernung in horizontaler Richtung und in vertikaler Richtung verschoben werden. Vorzugsweise werden die sich einstellenden Zwischenräume durch horizontale und vertikale Kanten gefüllt, wobei anschließend weitere Gewichtungsfaktoren für jedes Texel, das eine eingebrachte vertikale Kante enthält, bestimmt werden.

Das erfindungsgemäße Verfahren schafft einen neuartigen Ansatz für eine anisotrope Filterung, welche es ermöglicht z. B. die bekannte Filtertechnik des Flächenabtastens "area sampling" auf vierseitige Footprints anzuwenden, welche ein perspektivisch projiziertes quadratisches Bildelement darstellen, welche ein regelmäßiges Texelgitter überlagern. Genauer gesagt wird erfindungsgemäß ein weiterer Eingangsparameter, die sogenannte Vergrößerungsverschiebung, verwendet, um Aliasing-Artefakte zu steuern. Die Vergrößerungsverschiebung bestimmt, ob eine gewichtete Flächenabtastung oder eine ungewichtete Flächenabtastung auf die Fläche des Footprints angewendet werden soll, insbesondere wird hierdurch bestimmt, wie groß der Gewichtungsbeitrag oder der Grad der Gewichtung bei der Flächenabtastung sein soll. Vorzugsweise findet die vorliegende Anmeldung auf verformte Footprints Anwendung, beispielsweise auf kleine und längliche Footprints.

Eine typische Charakteristik und ein wesentliches Merkmal der vorliegenden Erfindung ist darin zu sehen, dass kein Hardware-basierter Schalter, auf der Basis eines Schwellenwertes, existiert, der entscheidet wann eine gewichtete und wann eine ungewichtete Flächenabtastung durchzuführen ist, welches tatsächlich zu Diskontinuitäten mit erkennbaren Artefakten führen würde. Statt dessen wird vorzugsweise der Betrag des gewichteten Flächenabtastens zunehmend erhöht.

Vorzugsweise erfolgt die zunehmende Erhöhung des Gewichtungsbeitrags mit kleiner werdendem Footprint, insbesondere während der Footprint kleiner wird als die Ausdehnung eines Texels in die Breite oder in die Höhe.

Gemäß einem weiteren Aspekt der vorliegenden Erfindung wird ein Verfahren zur Festlegung eines Gewichtungsfaktors für die Farbberechnung eines Farbwertes eines Texels für einen Footprint, der sich zumindest teilweise in das Texel erstreckt, in einem Graphiksystem geschaffen, bei dem eine Forminformation des Footprints bestimmt wird und basierend auf einer Vergrößerungsverschiebung der Footprint durch Verschieben der Kanten desselben nach außen um eine von dem Vergrößerungsverschiebung abhängige Entfernung vergrößert wird, so dass derselbe mehrere Texel überdeckt. Dann wird ein Gewichtungsfaktor für jedes Texel, das eine verschobene Kante enthält, bestimmt, abhängig von der durch den vergrö-βerten Footprint überdeckten Teilfläche des jeweiligen Texels.

Gemäß diesem Aspekt der vorliegenden Erfindung wird ermöglicht, für Footprints, welche nur eine geringe Anzahl von Texeln oder sogar nur ein Texel überdecken, die Farbbestimmung auf eine breitere Basis zu stellen, indem auch Informationen von benachbarten Texeln berücksichtigt wird, durch die Vergrößerung des Footprints. Es ist darauf hinzuweisen, das die Vergrößerung nur zur Bestimmung des Farbwertes erfolgt - der Footprint wird für die spätere Darstellung des Objekts, dem derselbe zugeordnet ist, nicht vergrößert.

Bevorzugte Weiterbildungen der vorliegenden Anmeldung sind in den Unteransprüchen definiert.

Nachfolgend werden anhand der beiliegenden Zeichnungen bevorzugte Ausführungsbeispiele der vorliegenden Erfindung näher erläutert. Es zeigen:

Fig. 1A und B      ein Flussdiagramm eines bevorzugten Ausführungsbeispiels des erfindungsgemäßen Verfahrens;

Fig. 2      die Darstellung eines Footprints im Texturraum;

Fig. 3      eine Darstellung zur Festlegung der Kantenausrichtung eines Footprints;

Fig. 4A und B      ein Flussdiagramm, das ein Verfahren zur Kantenberechnung gemäß einem Ausführungsbeispiel der vorliegenden Erfindung wiedergibt;

Fig. 5A und B      zwei Beispiele für eine Filtervergrößerung eines Footprints;

Fig. 6      eine Darstellung der Annäherung von Kanten des Footprints durch eine Treppenfunktion;

Fig. 7      eine Darstellung einer verschobenen Kante in einem Texelgitter mit den zugeordneten Gewichtungstabelleneinträgen;

Fig. 8A und B   ein Flussdiagramm, das ein Verfahren zum Verarbeiten einer verschobenen Kante gemäß einem Ausführungsbeispiel der vorliegenden Erfindung wiedergibt;

Fig. 9   eine Darstellung eines Footprints und eines vergrößerten Footprints, anhand der der Stufenübertrag beschrieben wird;

Fig. 10A und B   Darstellungen zur Verdeutlichung der Notation einer Scheitelpunktkante und eines Streifens (vertikales Stufenelement); und

Fig. 11A und B   ein Flussdiagramm, das ein Verfahren zur Farbberechnung eines Pixels wiedergibt.

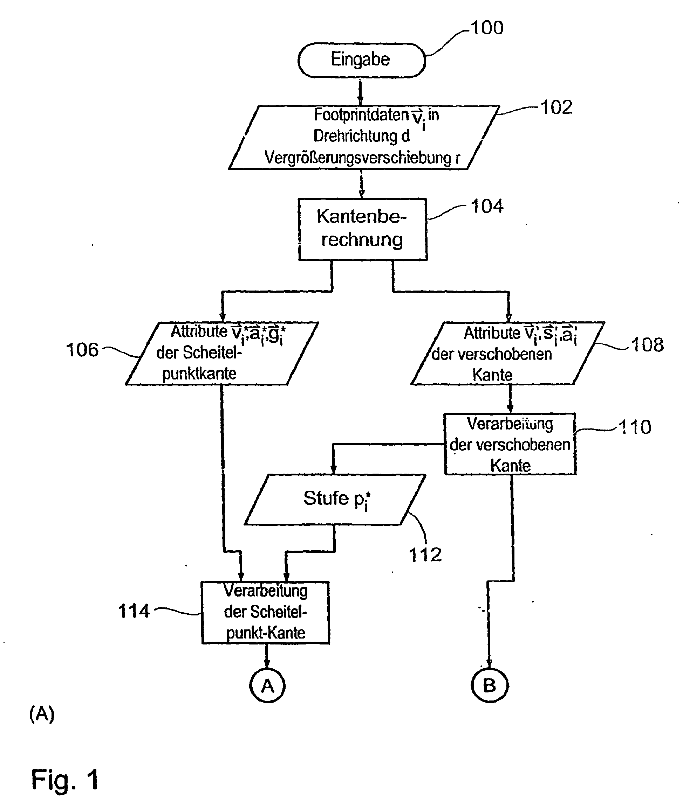

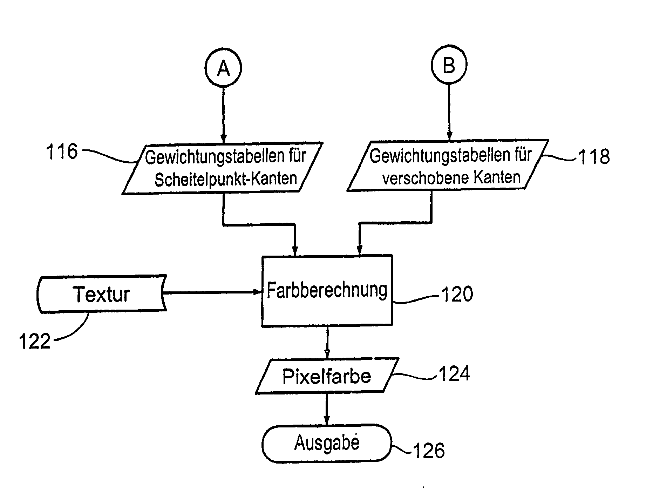

Nachfolgend wird anhand der Fig. 1 ein erstes Ausführungsbeispiel der vorliegenden Erfindung näher beschrieben, wobei einzelne Verfahrensschritte in der nachfolgenden Beschreibung noch detaillierter erläutert werden.

Hinsichtlich der weitergehenden Beschreibung wird darauf hingewiesen, dass für die Beschreibung des Footprints die mathematische Notation von Vektoren verwendet wird (im Text durch FETTDRUCK dargestellt). Die Einheitslänge aller Koordinaten und Längen ist die Breite (bzw. die Höhe) eines Texels in der Originaltextur oder in der Textur gemäß einer MipMap-Stufe, sofern vorhanden. Kantenattribute und Scheitelattribute umfassen den Index i, der von 0 bis 3 läuft, und alle Ergebnisse von Indexberechnungen, welche i = 0 bzw. i = 3 überschreiten werden auf tatsächliche Kanten zurückgerechnet. Dies bedeutet, dass ein Ergebnis von i = 4 zu i = 0 wird und ein Ergebnis von i = -1 wird zu i = 3.

Gemäß einem bevorzugten Ausführungsbeispiel empfängt das erfindungsgemäße Verfahren im Block 100 Eingangsdaten oder Informationen, die die Form, Position und Ausrichtung des vierseitigen Footprints wiedergeben, und die im Block 102 bereitstehen. Genauer gesagt werden im Block 102 die Footprintdaten $v_i^{in}$, die Drehrichtung d des Footprints und die Vergrößerungsverschiebung (Vergrößerungsoffset) r bereitgestellt. Durch den Empfang des zusätzlichen Eingangsparameters, nämlich der Vergrößerungsverschiebung r wird es ermöglicht, erfindungsgemäß den Grad des gewichteten Flächenabtastens festzulegen, der für kleine oder dünne Footprints, insbesondere kleine oder dünne vierseitige Footprints, erforderlich ist.

Im Block 104 erfolgt eine sogenannte Kantenberechnung. Diese Kantenberechnung umfasst das Vergrößern des Footprints durch Verschieben der Kanten desselben basierend auf der empfangenen Forminformation und dem Vergrößerungsparameter r. Im Rahmen der Kantenberechnung 104 werden anschließend vertikale Kanten in die sich aufgrund der Vergrößerung ergebenden Zwischenräume eingebracht, ein Begrenzungsrechteck wird berechnet, und alle Kanten werden im Block 104 in linke und rechte Kanten sortiert, so dass im Block 106 die Attribute für die vergrößerten Scheitelpunktkanten bereitgestellt werden, und im Block 108 die der verschobenen Kanten zugeordnete Attribute bereitgestellt werden. Genauer gesagt wird im Block 106 die Footprintinformation $v_i^*$, die Ausrichtung der einzelnen Kanten $a_i^*$ und die sich einstellenden Zwischenräume $g_i^*$ für den vergrößerten Footprint bereitgestellt. Im Block 108 werden die Scheitelpunktinformationen $v_i'$, eine Ausrichtung der verschobenen Kante $a_i'$ sowie entsprechende Kantenvektoren $s_i'$ bereitgestellt. Die im Block 108 bereitgestellten Informationen werden dem Block 110 zugeführt, in dem eine Verarbeitung bezüglich der verschobenen Kante durchgeführt wird. Im Block 110 wird zum einen eine Stufenübertrag $p_i^*$ berechnet, welcher im Block 112 bereitgestellt wird. Die im Block 106 und im Block 112 bereitgestellten Parameter werden dem Block 114 zugeführt, in dem eine Verarbeitung der Scheitelpunktkante erfolgt.

Aus den Verarbeitungen der Scheitelpunktkante (Block 114) und der verschobenen Kante (Block 110) resultieren die in den Blöcken 116 und 118 (Fig. 1B) bereitgestellten Gewichtungstabellen für die Scheitelpunkt-Kanten und die verschobenen Kanten.

Basierend auf den so erzeugten Tabellen erfolgt im Block 120 eine Farbberechnung, wobei der Block 120 zusätzlich Informationen bezüglich der Textur vom Block 122 erhält. Die Farbberechnung im Block 122 ergibt dann die Pixelfarbe, die im Block 124 bereitgestellt wird und im Block 126 ausgegeben wird.

Ist für den Footprint keine Vergrößerung erforderlich oder vorgesehen, so unterbleibt die Verschiebung der Kanten des Footprints. Das erfindungsgemäße Verfahren wird dann lediglich auf die ursprünglichen Kanten ausgeführt. Zusätzlich eingefügte Kanten existieren in diesem Fall nicht, bzw. sind für die Berechnung auf Null gesetzt.

In den Blöcken 110 bis 118 wird eine geeignete Datenstruktur für jede der Kanten des Footprints erstellt. Hierbei werden die nachfolgend erläuterten Schritte für jede Kante parallel durchgeführt. Zunächst wird eine Kante durch eine geeignete Anzahl von einfachen Treppenstufen angenähert, und alle Texel, welche durch eine Treppenfunktion einer linken Kante berührt werden, werden gesucht. Jedem aufgefundenen Texel wird dann ein Gewichtungswert zugeordnet, der den Bruchteil der verbleibenden Texelfläche, die rechts von der Stufenfunktion liegt, entspricht. Analog werden alle Texel, die unter der darzustellenden Struktur liegen, und die durch die Treppenfunktion einer rechten Kante berührt werden, gesucht. Den so aufgefundenen Texeln wird dann jeweils ein Gewichtungsfaktor zugeordnet, der dem Bruchteil der verbleibenden Fläche jedes Texels entspricht, die links von der Treppenfunktion angeordnet ist. Anschließend werden alle Koordinaten und entsprechenden Gewichtungen in einer geeigneten, einzigartigen Datenstruktur gespeichert, die der Kante des Footprints zugeordnet ist. Ferner wird allen Texeln ein Gewichtungswert von $\leq$ +1 bzw. von $\geq$ -1 zugeordnet, und zwar Texeln, die sich rechts von einer linken Kante bzw. einer rechten Kante - durch diese jedoch nicht berührt werden - und links von der rechten Kante des Begrenzungsrechtecks liegen. Diese Informationen werden zu der Datenstruktur hinzugefügt.

Vorzugsweise werden die so erzeugten Datenstrukturen gemäß einem bevorzugten Ausführungsbeispiel der vorliegenden Erfindung auf eine effizientere Art und Weise beurteilt, so dass jedes Texel, das durch den Footprint bedeckt wird, direkt durch die gespeicherten Koordinaten angesprochen werden kann, so dass nachfolgend dessen entsprechende Farbe mit dessen zugeordnetem Gewicht multipliziert (gewichtet) werden kann. Es wird darauf hingewiesen, dass jeder Gewichtungsfaktor die Summe der Gewichtungen derjenigen Kanten ist, welche in dem betrachteten Texel enthalten sind.

Im Block 120 in Fig. 1B wird eine Farbberechnung durchgeführt, wie sie im Stand der Technik an sich bekannt ist. Für diese Farbberechnung werden alle Gewichtungsfaktoren gesammelt und ebenso werden alle gewichteten Texel, welche durch den Footprint verwendet werden, gesammelt und anschließend wird die gesammelte Farbe durch die gesammelten Gewichtungsfaktoren geteilt. Das Ergebnis stellt das aus der Texturabbildung wiedergewonnene und gefilterte Bildfragment dar, welches dem Pixel zugeordnet ist, das auf das Texturbild abgebildet bzw. projiziert werden sollte.

Hinsichtlich der in Fig. 1 wiedergegebenen Werte $v_i'$, $a_i'$ und $s_i'$ bzw. $v_i^*$, $a_i^*$, $g_i^*$ wird darauf hingewiesen, dass sich die mit Apostroph versehenen Werte auf die verschobenen Kanten beziehen, wohingegen sich die mit einem Sternchen versehenen Werte auf die Scheitelpunkt-Kanten beziehen.

Der Vorteil der vorliegenden Erfindung besteht darin, dass das erfindungsgemäße Verfahren inhärent die Möglichkeit schafft, einen hohen Grad von Parallelität bei dessen Ausführungen in einer konkreten Hardware-Implementierung zu verwenden. Ferner ermöglicht das erfindungsgemäße Verfahren dessen Implementierung in einer Hardware-Pipeline, so dass gemäß einem bevorzugten Ausführungsbeispiel der vorliegenden Erfindung die oben beschriebenen Verfahrensschritte hardwaremäßig in unterschiedlichen Pipeline-Stufen realisiert sind. Vorzugsweise sind diejenigen Verfahrensschritte, die oben beschrieben wurden und die die Datenstruktur für jede Kante erzeugen, typischerweise als Hardwaremodul implementiert, und werden für jede Kante parallel instantiiert (aufgerufen). Diese parallel instantiierten Module stellen selbst wieder eine Pipeline-Stufe der gesamten Hardware-Pipeline dar.

Der grundsätzliche Prozess zur Wiedergewinnung der Pixelfarbe von einem Texel-Array, welches durch einen vierseitigen Footprint bedeckt wird, besteht darin, eine nichtgewichtete Flächenabtastung bezüglich dieses Footprints durchzuführen. Dies bedeutet, dass die Farbkomponenten des Texels zunächst über den Footprint integriert werden, und anschließend das Ergebnis durch die summierte Fläche des Footprints geteilt wird. Das Berechnen des Integrals erfordert das vorherige Multiplizieren jedes Texels durch einen geeigneten Gewichtungsfaktor. Der Gewichtungsfaktor beträgt 1,0 für diejenigen Texel, welche vollständig unterhalb des Footprints angeordnet sind. Erfindungsgemäß wird jedes Texel, welches nur teilweise durch den Footprint bedeckt wird, also am Rand des Footprints liegt, ein Gewichtungsfaktor zugeordnet, welcher proportional zur Größe der bedeckten Fläche ist.

Somit erfüllt das erfindungsgemäße Verfahren die folgenden zwei Aufgaben, die bisher beschrieben wurden, nämlich die Identifizierung aller Texel, welche vollständig oder teilweise durch den vierseitigen Footprint bedeckt sind, und die Berechnung eines Gewichtes für jedes Texel und die Zuordnung dieses Gewichtungsfaktors zu dem entsprechenden Texel.

Ferner wird erfindungsgemäß ein Überblenden realisiert, welches durch den zusätzlichen Parameter, den Vergrößerungsparameter r gesteuert wird, um ein Überblenden von einer ungewichteten in eine gewichtete Flächenabtastung durchzuführen.

Der Hintergrund des gerade beschriebenen Aspekt ist darin zu sehen, dass eine ungewichtete Flächenabtastung in dem wiedergewonnenen Bild dann erkennbare Aliasing-Artefakte erzeugt, wenn der Footprint stark verformt, z. B. Formen aufweist, welche lediglich sehr dünne und sehr längliche Flächen umfassen. Dies ist ebenfalls der Fall, wenn die Fläche, welche durch den Footprint bedeckt wird, wesentlich kleiner wird als die Fläche eines quadratischen Texels des Texelgitters.

Um die gerade erwähnten Artefakte in diesen Fällen zu vermeiden, wird erfindungsgemäß die Fläche des Footprints durch Verschieben der vier Kanten, welche die Grenze des Footprints wiedergeben, erweitert. In den oben beschriebenen Fällen nähert dies einen Footprint an, welcher als die Projektion eines Filterkernels interpretiert werden kann, der die Charakteristik eines gewichteten Flächenabtastens erfüllt, wobei der Filterkernel seine Nachbarn überlappt und eine bilinear ähnliche Verteilung aufweist.

Bei der oben dargelegten Beschreibung des bevorzugten Ausführungsbeispiels der vorliegenden Erfindung gemäß Fig. 1 wird darauf hingewiesen, dass das erfindungsgemäße Verfahren im wesentlichen die Blöcke 100 bis 118 umfasst, welche dann die erforderlichen Daten für eine im wesentlichen herkömmliche Farbberechnung bereitstellen. Ferner wird hinsichtlich der Fig. 1 angemerkt, dass alle rechteckigen Blöcke die Hauptverarbeitungsschritte wiedergeben, welche nachfolgend für bevorzugte Ausführungsbeispiel der vorliegenden Erfindung im Detail beschrieben werden. Die Ergebnisse der Verarbeitungsschritte sind in Datenstrukturen gespeichert, die in Fig. 1 in den parallelogrammförmigen Blöcken wiedergegeben sind. Diese Ergebnisse werden als Eingänge für die nächsten Verarbeitungsstufen herangezogen.

Die in Fig. 1 im Block 100 eingegebenen Daten und im Block 102 bereitgestellten Daten umfassen die Informationen bezüglich des Footprints $v_i^{in}$, welcher gemäß einem bevorzugten Ausführungsbeispiel konvex ist und bei dem die Höhe und die Breite keiner der Kanten einen vorbestimmten maximalen Wert $E_{max}$ überschreiten darf. Ferner wird eine Drehrichtung d für den Footprint eingegeben, wobei d = +1 für eine Drehrichtung im Uhrzeigersinn und d = -1 für eine Drehrichtung entgegen dem Uhrzeigersinn steht. d wird auf 0 gesetzt, wenn die Drehung aufgrund der Verformung des Footprints nicht mehr festgestellt werden kann. Ferner wird die Vergrößerungsverschiebung r eingegeben, welche vorzugsweise auf einen Wert zwischen 0,0 und 0,5 beschränkt ist.

Bei der oben erwähnten maximalen Kantenlänge $E_{max}$ handelt es sich vorzugsweise um einen Hardware-codierten Wert, der eine Potenz von 2 sein sollte, wobei hier der Wert 8 bevorzugt wird. Höhere Werte werden den Rasterprozess, also die Verarbeitungsgeschwindigkeit des Graphiksystems, signifikant verlangsamen und die erforderlichen Datenstrukturen deutlich vergrößern. Würde keine 2er Potenz verwendet, wären die mit $E_{max}$ verbundenen Berechnungen in Hardware nur aufwendig zu realisieren.

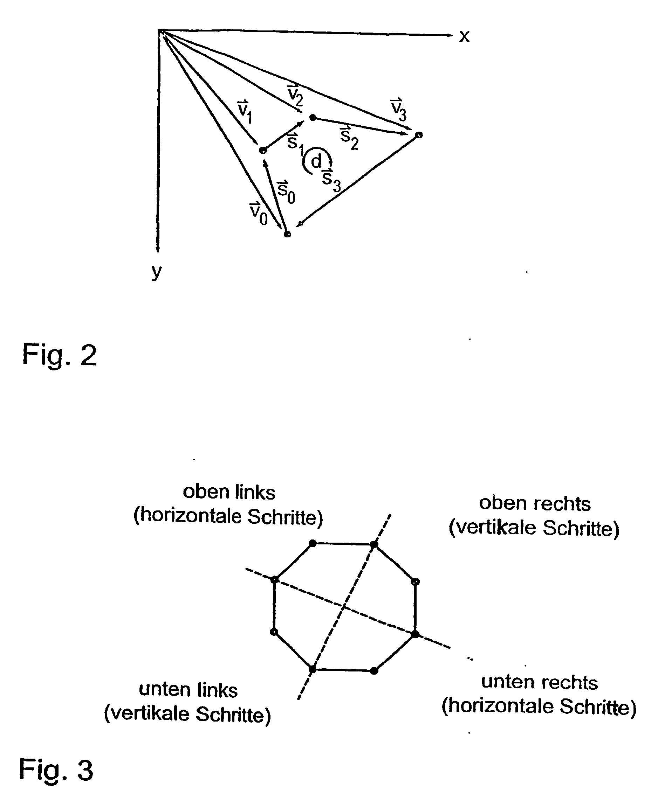

Fig. 2 zeigt ein Beispiel für eine Darstellung eines Footprints im Texturraum. Der Texturraum ist bei dem dargestellten Beispiel durch die Koordinaten x und y aufgespannt. Der Footprint ist durch die vier Scheitelpunktvektoren $v_0$ bis $v_3$ sowie die vier Kantenvektoren $s_0$ bis $s_3$ definiert. Ferner ist durch die Richtung der Kantenvektoren $s_0$ bis $s_3$ die Drehrichtung d des Footprints festgelegt. Fig. 2 zeigt die typische Form eines Footprints in dem Texturraum. Der Footprint ist durch dessen Umgrenzung definiert, die wiederum aus den vier Kanten $s_0$ bis $s_3$ besteht, und daher oft auch als vierseitiges Element bezeichnet wird. Die vier Scheitelpunkte $v_0$ bis $v_3$, die durch die vier in Fig. 2 gezeigten Vektoren im Texturraum positioniert sind, definieren die Kanten $s_0$ bis $s_3$.

Wie nachfolgend noch näher beschrieben wird, besteht ein Hauptaspekt der vorliegenden Erfindung darin, dass horizontale und vertikale Stufenfunktionen angewandt werden, um jede der Kanten anzunähern. Um jedoch einen konsistenten und einzigartigen Gewichtungsalgorithmus zu erhalten, der für alle Kanten $s_0$ bis $s_3$ parallel abgearbeitet werden kann, wird für die weitergehende Berechnung angenommen, dass die Kanten lediglich Beiträge zu denjenigen Texeln liefern, welche rechts von einer Kante angeordnet sind. Somit werden Werte von linksseitigen Kanten zu dem effektiven Gewichtungsfaktor, der sich für alle Kanten ergibt, addiert, und Werte von rechtsseitigen Kanten werden von dem effektiven Gewichtungsfaktor, der von allen Kanten resultiert abgezogen. Die Kantenattribute links, rechts, unten und oben sind in Fig. 3 dargestellt.

Wie ferner aus Fig. 3 zu entnehmen ist, werden Kanten, die als unten links bzw. oben rechts liegend eingestuft werden, durch vertikale Stufenelemente angenähert, wohingegen Kanten, welche als unten rechts bzw. oben links liegend angesehen werden durch horizontale Stufenelemente angenähert werden. Die gerade beschriebenen horizontalen und vertikalen Stufen werden nachfolgend noch detaillierter beschrieben.

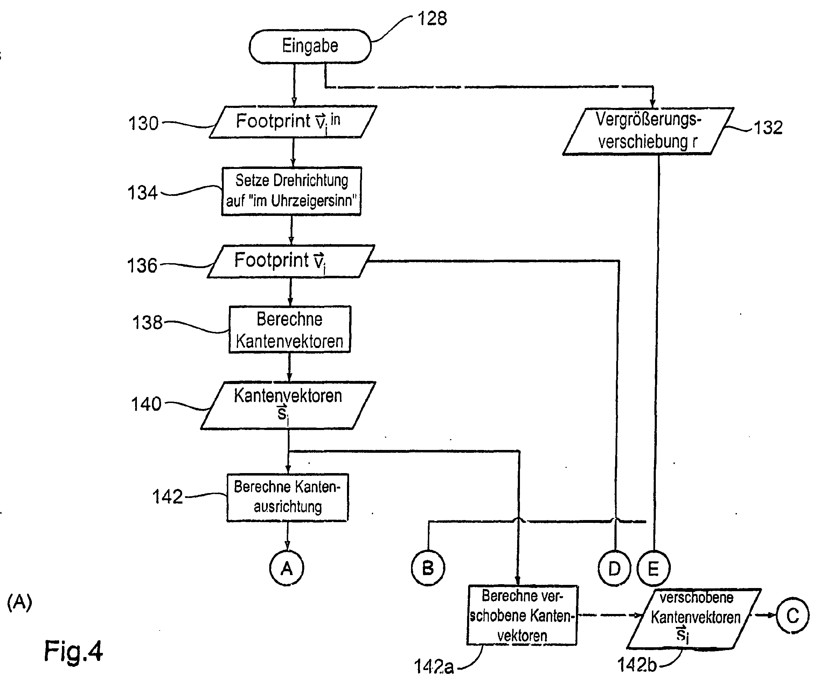

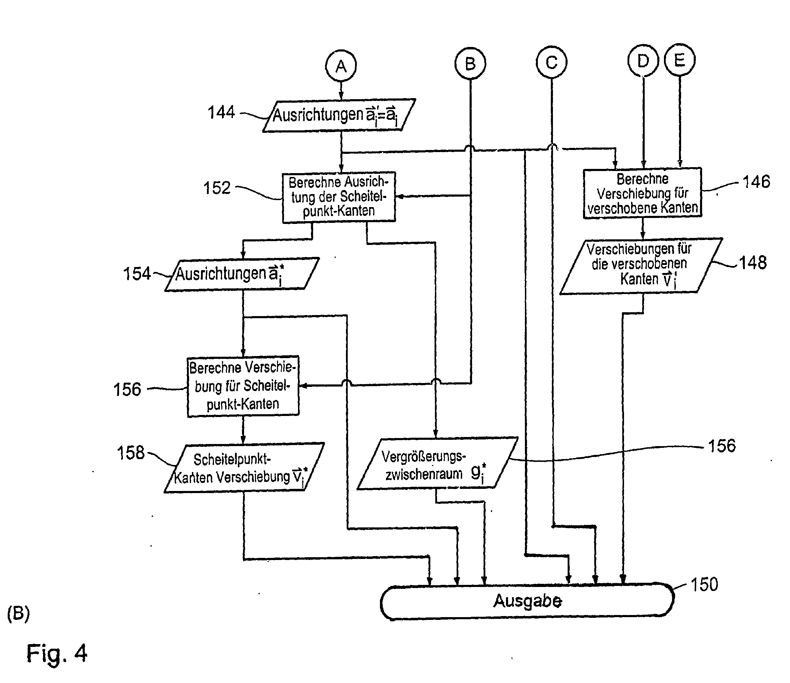

Zunächst wird anhand der Fig. 4 ein erster Hauptverarbeitungsschritt des erfindungsgemäßen Verfahrens nach einem bevorzugten Ausführungsbeispiel näher erläutert, nämlich die in Fig. 1A im Block 104 allgemein angegebene Kantenberechnung. Im Block 128 empfängt das Verfahren zur Kantenberechnung die hierfür erforderlichen Daten, nämlich die Footprintdaten $v_i^{in}$ und die Vergrößerungsverschiebung r, welche in den Blöcken 130 und 132 der weiteren Verarbeitung bereitgestellt wird. Die Kantenberechnung erzeugt die angenäherte Fläche des Footprints, wobei eine positive Filtervergrößerung, angezeigt durch den Vergrößerungsverschiebung r, mit $r \geq 0$, mit einbezogen wird. Jede Kante des ursprünglichen Footprints wird von dem Mittelpunkt weg bewegt, durch Hinzufügen einer Verschiebung mit der Größe r. Diese Kanten werden im weiteren als verschobene Kanten bezeichnet. Als ein Ergebnis dieser "Explosion" ergeben sich horizontale und vertikale Zwischenräume zwischen den ursprünglichen Scheitelpunkten des Footprints. Horizontale Zwischenräume können bei dem erfindungsgemäßen Verfahren gemäß dem beschriebenen Ausführungsbeispiel ignoriert werden, vertikale Zwischenräume werden jedoch einfach durch vertikale Kanten, die sogenannten Scheitelpunktkanten aufgefüllt.

Um die Berechnung der Kanten- und Scheitelpunktattribute zu vereinfachen und hinsichtlich der erforderlichen Hardware-Implementierung weniger aufwendig zu gestalten, werden im Block 134 Footprints, welche eine Drehrichtung entgegen dem Uhrzeigersinn aufweisen, stets in Footprints mit einer Drehrichtung im Uhrzeigersinn umgewandelt (siehe Fig. 2). Die Umwandlung erfolgt gemäß der nachfolgend wiedergegebenen Berechnungsvorschrift:

$$\vec{v}_{0,1,2,3} = \begin{cases} \vec{v}_{0,1,2,3}^{in} & \text{wenn } d \geq 0 \\ \vec{v}_{2,1,0,3}^{in} & \text{wenn } d < 0 \end{cases}$$

$v_{0,1,2,3}^{in}$ = im Block 128 empfangene Eingangsdaten.

Die gemäß der obigen Berechnungsvorschrift erhaltenen Footprintdaten $v_{0,1,2,3}$ werden im Block 136 zur weiteren Verarbeitung bereitgestellt.

Basierend auf der im Block 136 bereitgestellten Footprintinformationen $v_i$ ergeben sich die Kantenvektoren gemäß der nachfolgenden Berechnungsvorschrift:

$$\vec{s}_i = \bar{v}_{i+1} - \bar{v}_i$$

Ferner werden die sogenannten Ausrichtungsvektoren $a_i$ für die Kanten berechnet, um die entsprechenden Kanten in linke/rechte und obere/untere Kanten zu klassifizieren. Basierend auf der in Fig. 3 gezeigten Einteilung wird für jede Kante bestimmt, in welchem Quadrat dieselbe liegt. In der nachfolgenden Tabelle sind die Werte für die zwei Komponenten des Kantenorientierungsvektors $a_i$, nämlich für die Komponenten $a_{i,x}$ und $a_{i,y}$ wiedergegeben für verschiedene Vorzeichen der Komponenten $s_{i,x}$ bzw. $s_{i,y}$ des Kantenvektors $s_i$.

| Vorzeichen ($s_{i,x}$) | Vorzeichen ($s_{i,y}$) | $a_{i,x}$ | $a_{i,y}$ |
|---|---|---|---|
| $\geq 0$ | $< 0$ | -1 | -1 |
| $> 0$ | $\geq 0$ | +1 | -1 |
| $\leq 0$ | $> 0$ | +1 | +1 |
| $< 0$ | $\leq 0$ | -1 | +1 |
| $= 0$ | $= 0$ | 0 | 0 |

In der obigen Tabelle zeigt ein Wert von +1 eine Ausrichtung nach rechts entlang der x-Achse und nach unten in Richtung der y-Achse in dem in Fig. 3 aufgespannten Texturraum wieder. Ein Wert von -1 zeigt eine Ausrichtung nach links in Richtung der x-Achse und eine Ausrichtung nach oben in Richtung der y-Achse. Horizontale Kanten und vertikale Kanten werden die gerade genannten Werte zugeordnet. Eine "0-Kante" (in einem Punkt verformte Kante) resultiert zu einem Vektor a = 0 bzw. zu einem Wert für a = 0.

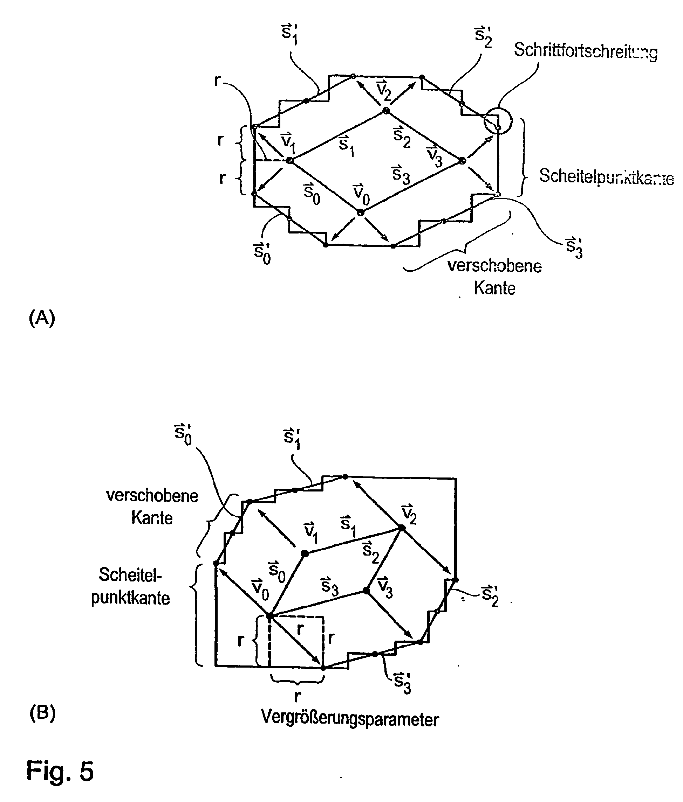

Die in der Tabelle wiedergegebenen Orientierungen werden verwendet, um die Richtung einer Vergrößerungsverschiebung festzustellen. Der Footprint wird auf vier verschobenen Kanten $v_i'$, $s_i'$ erweitert, abhängig von der Größe des beschränkten Vergrößerungsparameters r. Tatsächlich wird jeder der ursprünglichen Scheitelpunkte auf die in Fig. 5A und 5B beschriebene und wiedergegebene Art und Weise um den Vergrößerungsparameter r verschoben, wodurch sich die verschobenen Kanten $s_i'$ einstellen. Nachdem alle Kanten von links nach rechts abgetastet werden sollten, müssen der Startpunkt und der Endpunkt für diejenigen Kanten, welche als unten liegend festgestellt wurden, vertauscht werden, was gemäß der nachfolgend wiedergegebenen Berechnungsvorschrift durchgeführt wird:

$$\vec{a}_i' = \bar{a}_i$$

$$\vec{s}_i' = -a_{i,y} \cdot \vec{s}_i$$

$$\bar{v}_i' = r \cdot \bar{a}_i + \begin{cases} \bar{v}_i & \text{wenn } a_{i,y} < 0 \\ \bar{v}_{i+1} & \text{sonst} \end{cases}$$

Die gerade beschriebenen Berechnungen erfolgen in Fig. 4A zum einen im Block 138, worauf sich die Kantenvektoren $s_i$ ergeben, die im Block 140 bereitgestellt werden. Basierend auf diesen Informationen werden im Block 142a die verschobenen Kantenvektoren $s_i'$ berechnet und im Block 142b für die Ausgabe im Block 150 bereitgestellt. Basierend auf diesen Informationen wird im Block 142 die Ausrichtung der Kanten berechnet, und anschließend im Block 144 (Fig. 4B) zur weiteren Verarbeitung bereitgestellt. Im Block 146 werden basierend auf den im Block 144 bereitgestellten Ausrichtungen $a_i'$, basierend auf den im Block 136 bereitgestellten Footprintdaten $v_i$ sowie basierend auf dem im Block 132 bereitgestellten Vergrößerungsparameter r die Verschiebung für die verschobenen Kanten berechnet, so dass im Block 148 die verschobenen Kanteninformationen $\mathbf{v_i'}$ bereitgestellt werden und im Block 150 ausgegeben werden.

Zwischenräume, die sich aufgrund der Verschiebung jedes Scheitelpunkts des Footprints ergeben, werden durch die vertikalen Scheitelpunkt-Kanten gehandhabt. Die Verschiebung dieser Kanten hängt von der Ausrichtung der zwei benachbarten Kanten, die eine Länge von größer 0 aufweisen ab. Diese Kanten werden mit $j^\pm$ indiziert, abhängig von dem Scheitelpunktindex i, gemäß der nachfolgend wiedergegebenen Berechnungsvorschrift:

$$j^+(i) = \begin{cases} i+2 & \text{wenn } a_i' = a_{i+1}' = 0 \\ i+1 & \text{wenn } a_i' = 0 \\ i & \text{sonst} \end{cases}$$

$$j^-(i) = \begin{cases} i-3 & \text{wenn } a_{i-1}' = a_{i-2}' = 0 \\ i-2 & \text{wenn } a_{i-1}' = 0 \\ i-1 & \text{sonst} \end{cases}$$

Unter Verwendung dieser Indexübersetzung ergibt sich der modifizierte Ausrichtungsvektor $a_i^*$ und die Zwischenraumflag $\vartheta_i^*$ wie folgt:

| $a_{j^-(i),x}'$ | $a_{j^-(i),y}'$ | $a_{j^+(i),x}'$ | $a_{j^+(i),y}'$ | $a_{i,x}^\bullet$ | $a_{i,y}^\bullet$ | $\vartheta_i^\bullet$ |
|---|---|---|---|---|---|---|
| <0 | <0 | <0 | <0 | -1 | -1 | 0 |
| <0 | <0 | >0 | <0 | x | x | 0 |
| <0 | <0 | >0 | >0 | +1 | +1 | 1 |
| >0 | <0 | >0 | <0 | +1 | -1 | 0 |
| >0 | <0 | <0 | >0 | +1 | -1 | 1 |
| >0 | <0 | >0 | >0 | +1 | -1 | 1 |
| <0 | >0 | <0 | <0 | -1 | +1 | 1 |
| <0 | >0 | >0 | <0 | -1 | +1 | 1 |
| <0 | >0 | <0 | >0 | -1 | +1 | 0 |
| >0 | >0 | <0 | <0 | -1 | -1 | 1 |
| >0 | >0 | <0 | >0 | x | x | 0 |
| >0 | >0 | >0 | >0 | +1 | +1 | 0 |
| sonst | | | | x | x | x |

X steht für einen Wert, der keine Auswirkungen auf folgende Berechnungen hat und daher beliebig sein kann. Der Basispunkt für die Scheitelpunktkante und die Größe des Vergrößerungszwischenraums ergibt sich dann gemäß der nachfolgend wiedergegebenen Berechnungsvorschrift:

$$\bar{v}_i^\bullet = \bar{v}_i + r \cdot \bar{a}_i^\bullet$$

$$g_i^{\bullet} = \begin{cases} 0 & \text{wenn } a_i = 0 \\ \vartheta_i^{\bullet} \cdot 2r & \text{sonst} \end{cases}$$

Die Bedingung $a_i = 0$, woraus folgt $g_i^* = 0$, stellt sicher, dass eine "0-Kante", die zwei benachbarte und auch identische Scheitelpunkte mit den gleichen Attributen aufweist, lediglich eine Zwischenraumkante für die nachfolgende Texelgewichtung erzeugt. Die oben beschriebenen Berechnungsschritte erfolgen zunächst im Block 152, in dem basierend auf der im Block 144 bereitgestellten Ausrichtung $a_i'$ und basierend auf dem Vergrößerungsparameter r eine Ausrichtung der Scheitelpunkt-Kanten berechnet wird, die dann im Block 154 bereitgestellt wird. Ferner wird der Vergrößerungszwischenraum $g_i^*$ im Block 156 bereitgestellt, der ebenfalls durch die Berechnung im Block 152 erzeugt wurde.

Basierend auf den Ausrichtungen $a_i^*$, die im Block 154 bereitgestellt wurden, erfolgt im Block 156 die Berechnung der Verschiebung für die Scheitelpunktkanten $v_i^*$, die dann im Block 158 bereitgestellt werden. Im Block 150 werden dann die verschobenen Scheitelpunktkanten $v_i^*$, die Ausrichtungen $a_i^*$, der Vergrößerungszwischenraum $g_i^*$, die im Block 144 bereitgestellte Ausrichtung $a_i'$, die verschobenen Kantenvektoren $s_i'$ sowie die verschobenen Scheitelpunktinformationen $v_i'$ ausgegeben, wie dies in Fig. 1A in den Blöcken 106 und 108 wiedergegeben ist.

Basierend auf den ausgegebenen Attributen $v_i'$, $s_i'$ und $a_i'$ erfolgt nachfolgend in einem zweiten Hauptverarbeitungsschritt die Verarbeitung der verschobenen Kanten, welche in Fig. 1A im Block 110 angegeben ist. Für die Verarbeitung der verschobenen Kanten werden dieselben durch eine Anzahl von Stufen approximiert, wobei die Anzahl der Stufen von der Größe der verschobenen Kante abhängt. An dieser Stelle sei darauf hingewiesen, dass 0-Kanten mit einem Wert $a_i = 0$ ausgelassen werden. Ferner soll die Breite und die Höhe einer Stufe einen Wert von 1,0 nicht überschreiten. Zunächst muss also die Anzahl der Schritte $n_{Stufe}$ pro Kante bestimmt werden. Dies erfolgt gemäß der nachfolgenden Berechnungsvorschrift:

$$s_{max} = \max\left(\left|s_{i,x}'\right|, \left|s_{i,y}'\right|\right)$$

$$1) \quad n_{i,Stufe} = \lceil s_{max} \rceil$$

$$2) \quad n_{i,Stufe} = 2^{\lceil \log_2(s_{max}) \rceil}$$

Bevorzugt wird das mit 2) bezeichnete Berechnungsverfahren, da dieses durch den hartcodierten Maximalwert für die Kantenlängen $E_{max}$ signifikant vereinfacht werden kann und ferner aufwendige Teiler durch einfache Schiebeoperationen in der nachfolgenden Berechnung der Stufenvektoren $q_i$ ersetzt. Die Stufenvektoren $q_i$ berechnen sich gemäß der nachfolgend wiedergegebenen Berechnungsvorschrift:

$$\bar{q}_i = \frac{1}{n_{i,Stufe}} \cdot \bar{s}_i'$$

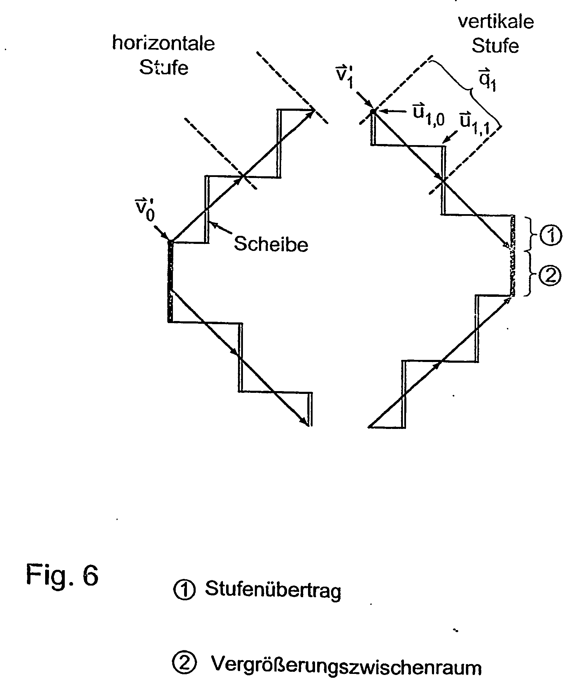

Um das gleiche Gewichtungsverfahren bei allen Scheitelpunkten zu erhalten, sind zwei unterschiedliche StufenVerfahren erforderlich. Die Stufenausrichtung $\vartheta_i'$ ist 0, also horizontal, für oben rechts liegende Kanten und unten links liegende Kanten. Die Stufenausrichtung $\vartheta_i'$ ist 1, ist also vertikal, für oben links liegende Stufen und für unten rechts liegende Stufen. Horizontale Stufen beziehen sich auf horizontale Schnittpunkte einer Treppenfunktion mit der entsprechenden Kante am Ende des Stufenvektors $q_i$. Ebenso beziehen sich vertikale Stufen auf vertikale Schnittstellen der Stufenfunktion mit der jeweiligen Kante am Ende des Stufenvektors $q_i$, wie dies aus Fig. 6 zu entnehmen ist. Ein Streifen ist ein vertikales Stufenelement, welches verwendet wird, um die Gewichtungen der Texel zu bestimmen. Für die Stufenausrichtung $\vartheta_i'$ gilt die folgende Berechnungsvorschrift:

$$\vartheta_i' = \begin{cases} 1 & \text{wenn } \left(\left(a_{i,x} < 0\right) \text{und} \left(a_{i,y} > 0\right)\right) \text{oder} \left(\left(a_{i,x} > 0\right) \text{und} \left(a_{i,y} < 0\right)\right) \\ 0 & \text{sonst} \end{cases}$$

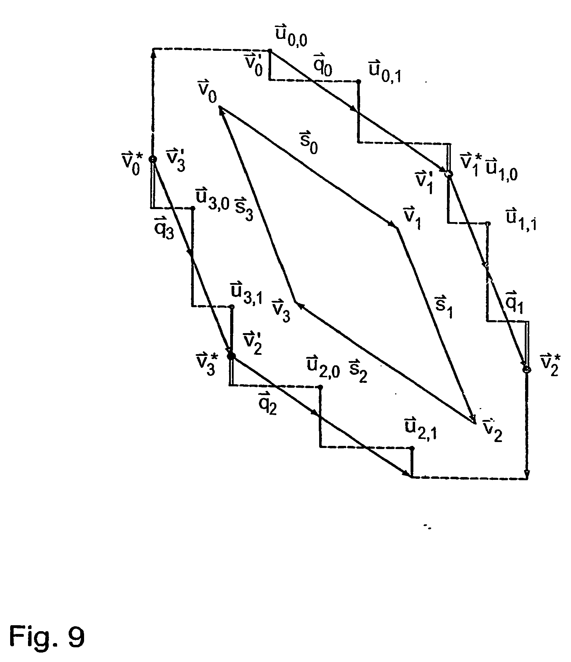

Nachdem die Kanten mit einer Stufenausrichtung $\vartheta_i'$ gleich 1 ein vertikales Element mehr aufweisen als die Anzahl der Stufen $n_{i,stufe}$, wäre ein zusätzlicher Gewichtungszyklus erforderlich. Statt dessen kann dieser jedoch auf die Verarbeitung einer benachbarten Scheitelpunkt-Kante mit derselben x Position verschoben werden, was im Zusammenhang mit der vorliegenden Erfindung als Stufenübertrag (step propagation) bezeichnet wird, und nachfolgend anhand der Fig. 9 noch näher erläutert wird.

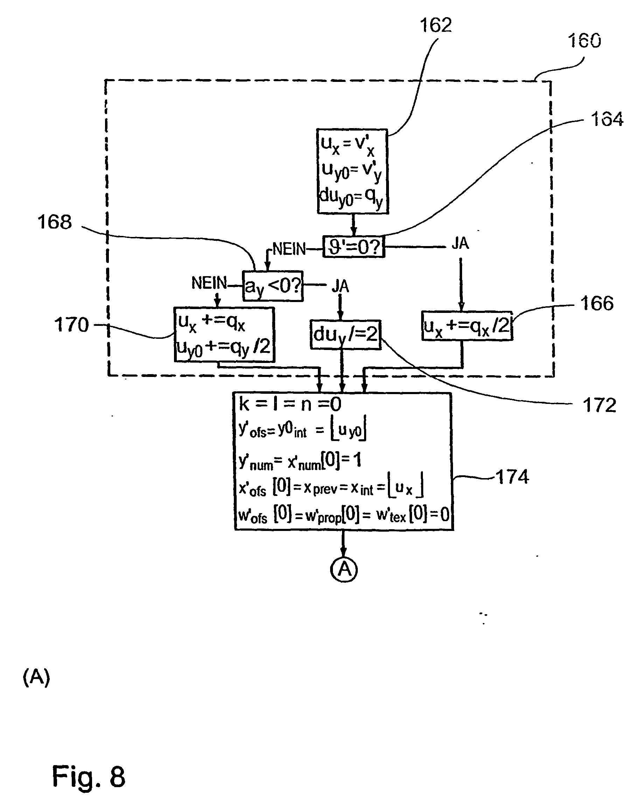

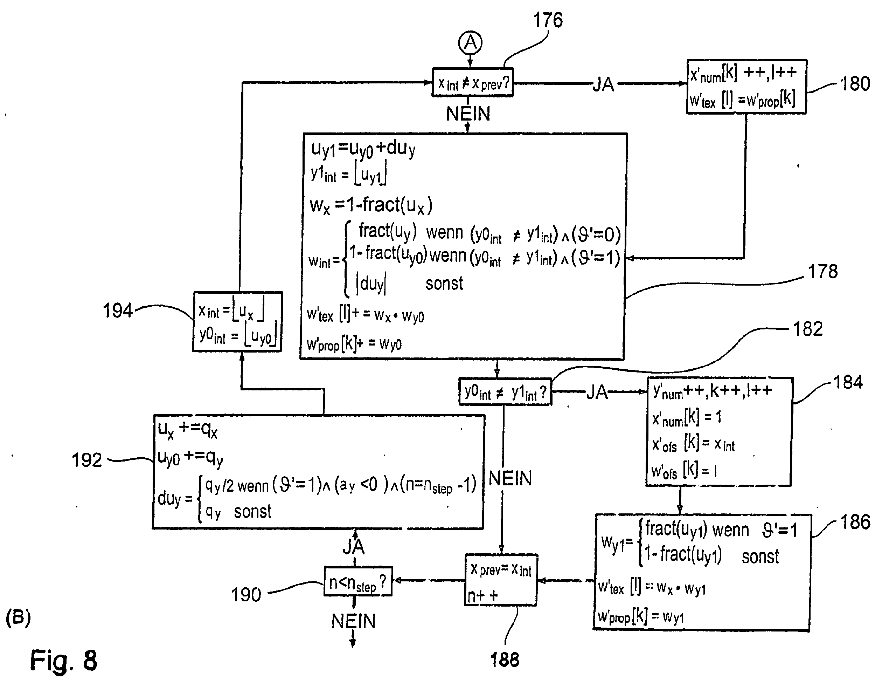

Eine Streifenverarbeitungsschleife ist für jede Kante vorgesehen, und verarbeitet eine Streife pro Zyklus, wie dies nachfolgend noch detaillierter anhand der Fig. 8 beschrieben wird. Jeder Zyklus kann ein oder zwei Texel gewichten, wobei die Eingangsparameter für die Verarbeitungsschleife $\mathbf{v'}$, $\mathbf{q}$, $n_{Stufe}$, a' y und $\vartheta'$ sind. Die Schleife erzeugt eine Datenstruktur und füllt diese mit entsprechenden Daten, die in der nachfolgenden Tabelle wiedergegeben sind:

| | |
|---|---|
| $y'_{ofs}$ | y ist die ganzzahlige Koordinate einer Texelreihe k = 0. Dies ist die oberste Reihe für Kanten für die gilt $\vartheta'$ = 1, und ansonsten die unterste Reihe. |
| $y'_{num}$ | Anzahl der Texelreihen |
| $x'_{ofs}[k]$ | x ist die ganzzahlige Koordinate des am meisten links liegenden gewichteten Texels in dieser Reihe |
| $x'_{num}[k]$ | Anzahl der gewichteten Texel dieser Reihe |
| $w'_{ofs}[k]$ | Gewichtungsindex 1 für das am meisten links liegende Texel |
| $w'_{prop}[k]$ | Gewichtungsfaktor für Texel in dieser Reihe, die außerhalb des am weitesten rechts liegenden und gewichteten Texels liegen |
| $w'_{tex}[1]$ | Texelgewichtung = 0,0 bis 1,0 |

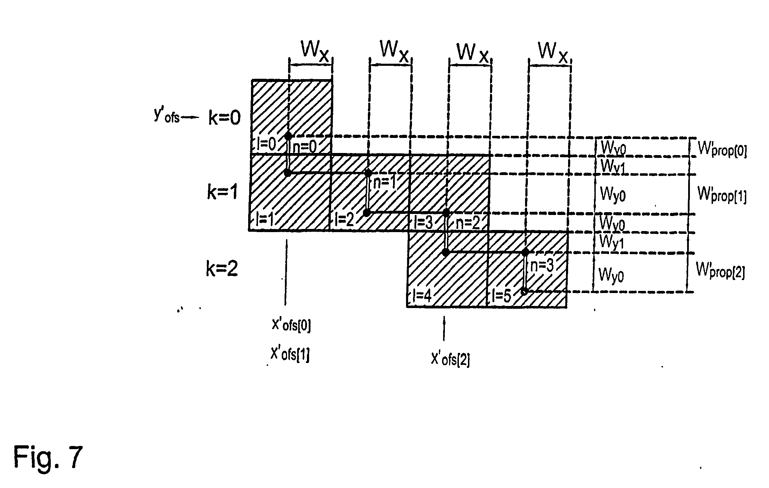

In Fig. 7 sind die in der obigen Tabelle wiedergegebenen Einträge graphisch dargestellt. Der höchstmögliche Wert für k und 1 hängt bei dem bevorzugten Ausführungsbeispiel von der maximal zulässigen Kantenerstreckung $E_{max}$ ab, so dass gilt:

k = 0, ..., $E_{max}$, und
1 = 0, ... , 2 $E_{max}$.

Für den Stufenübertrag gilt die folgende Berechnungsvorschrift:

$$\dot{p}_i = \vartheta_i' \cdot \tfrac{1}{2} \left| q_{i,y} \right|$$

Anhand der Fig. 8 wird nachfolgend ein bevorzugtes Ausführungsbeispiel der oben erwähnten Streifenverarbeitungsschleife näher erläutert.

Hinsichtlich der nachfolgenden Beschreibung einer Streifenverarbeitungsschleife in Fig. 8 wird darauf hingewiesen, dass hier auf die explizite Angabe des Index i verzichtet wurde, da dieser bei allen Werten auftauchen würde. Beschrieben wird lediglich der Vorgang für eine Kante, wobei das anhand der Fig. 8 beschriebene Verfahren dann im Regelfall für alle Kanten parallel durchgeführt wird. In Fig. 8 ist ferner der Index 1 angegeben, der für die Verarbeitung der Streifen lediglich die Anzahl der durch eine Kante getroffenen Texel (siehe Fig. 7) zählt.

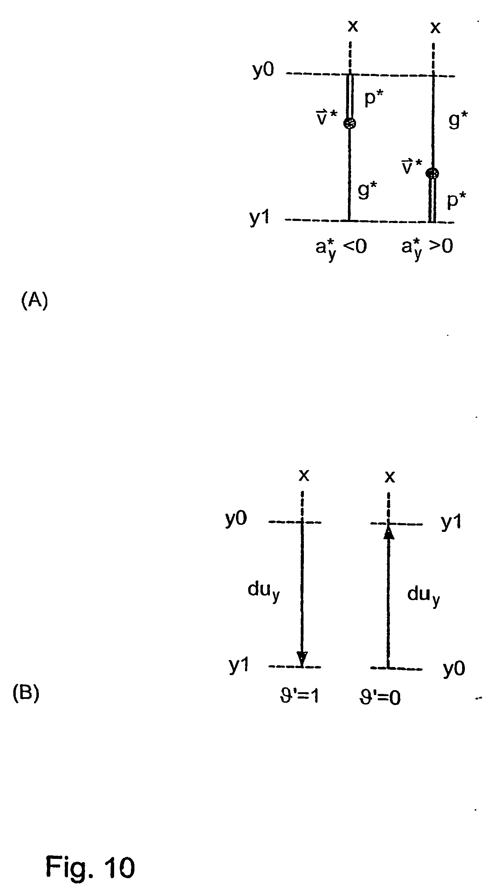

In einem anfänglichen Abschnitt 160 werden die Koordinaten für den ersten Streifen (Slice), siehe auch die Vektoren $\mathbf{u_{i,0}}$ in Fig. 9, initialisiert. In dem Block 162 werden die Koordinaten des Anfangspunktes $u_x$, $u_{y0}$ sowie die Höhe $du_y$ (siehe Fig. 10B) festgelegt, wobei die tatsächlichen Koordinaten des ersten Streifen vom Beginn der betrachteten Kante, was durch den entsprechenden Anfangsscheitelpunkt v angezeigt ist, und von der Orientierung der Kante, was durch $\vartheta'$ bzw. $a_y$ angezeigt wird, abhängen. Daher wird zur Festlegung des tatsächlichen Anfangspunktes zunächst im Block 164 bestimmt, ob für den betrachteten, im Block 162 festgelegten Punkt eine horizontale Stufenausrichtung $\vartheta'$ existiert oder nicht. Ist die Stufenorientierung horizontal, so geht das Verfahren zum Block 166, in dem die Koordinate

$u_x$ des Anfangspunktes um den Wert $q_x/2$ erhöht wird. Die übrigen im Block 162 festgelegten Koordinaten bzw. Parameter bleiben gleich.

Handelt es sich bei der im Block 164 festgestellten Stufenausrichtung nicht um eine horizontale sondern um eine vertikale Ausrichtung, so geht das Verfahren zum Block 168, in dem zunächst die Ausrichtung ay der betrachteten Kante bestimmt wird. Handelt es sich bei der betrachteten Kante um eine obere Kante, so geht das Verfahren zum Block 170, in dem der Koordinatenwert $u_x$ um den Wert $q_x$ erhöht wird. Ebenso wird im Block 170 der Koordinatenwert $u_{y0}$ um den Wert $q_y/2$ erhöht.

Wird im Block 168 festgestellt, dass die betrachtete Kante eine untere Kante ist, so geht das Verfahren zum Block 172, in dem die Höhe $du_y$ halbiert wird.

Die so festgelegten Anfangskoordinaten für den betrachteten Streifen werden dann dem Block 174 bereitgestellt. Im Block 174 werden zunächst die verwendeten Indizes initialisiert, wobei k die Texelreihen zählt, 1 die Texel insgesamt zählt, und n die Streifen/Slices zählt. Die Koordinate der ersten Texelreihe $y'_{ofs}$ entspricht dem Texel unter dem Slice-Anfangspunkt, wobei in der zweiten Zeile im Block 174 bezüglich des Anfangskoordinatenwertes $u_{y0}$ die sogenannte Floor-Funktion angezeigt ist, welche den nächsten ganzzahligen Wert in Richtung -∞ ausgehend von dem angegebenen Wert für $u_{y0}$ wiedergibt.

Die Anzahl der betroffenen Reihen und der betroffenen Texel bei der Bearbeitung des Streifens wird in der ersten Reihe aus 1 initialisiert, wie dies durch $y'_{num} = x'_{num}[0] = 1$ wiedergegeben ist. Ferner wird die x Koordinate $x'_{ofs}$ des Beginns der ersten Reihe gleich der Slice-Position $u_x$ sein, wobei hier wieder der nächste ganzzahlige Wert ausgehend von $u_x$ in Richtung -∞ gewählt wird. Ferner wird die Gewichtungsinformation $w'_{ofx}$ für die erste Reihe und das erste Texel zum Wert 0 initialisiert.

Basierend auf den im Block 174 initialisierten Werten fährt das Verfahren bei Block 176 in Fig. 8B fort. Im Block 176 wird überprüft, inwieweit sich die zur Zeit betrachtete x-Position aufgrund späterer Berechnungen geändert hat. Ausgehend vom Block 174 wird festgestellt, dass die zwei im Block 176 angegebenen Parameter gleich sind, so dass das Verfahren in diesem Fall zum Block 178 weiter geht, in dem das erste Texel gewichtet wird. Im Block 178 erfolgt eine Bestimmung der Gewichtungen für das erste von dem Streifen getroffene Texel, was gemäß den im Block 178 wiedergegebenen Berechnungsvorschriften bestimmt wird. Im Block 178 wird zunächst der Streifen-Endpunkt $u_{y1}$ berechnet, und anschließend die dazugehörige ganzzahlige Texel-Koordinate $y1_{int}$, basierend auf dem nächsten ganzzahligen Wert von $u_{y1}$ in Richtung -∞. Anschließend wird der Texel-Bruchteil $w_x$ berechnet, der sich durch den vertikalen Schnitt ergibt, wie dies in Fig. 7 dargestellt ist. Ferner wird der Bruchteil $w_{y0}$ berechnet, der sich durch den horizontalen Schnitt ergibt. Die angegebene Fallunterscheidung berücksichtigt, welche Richtung der Streifen aufweist (siehe Fig. 10B) und ob ein oder zwei Texel getroffen sind.

Basierend auf den so bestimmten Informationen betreffend die Bruchteile des horizontalen und vertikalen Schnittes wird im Block 178 der Gewichtungsbeitrag $w'_{tex}[1]$ des Streifens zum aktuellen Texel bestimmt, in dem der existierende Wert um das Produkt aus $w_x$ mal $w_{y0}$ erhöht wird. Abschließend wird noch der an das rechts liegende Texel weitergegebene Gewichtungsbeitrag $w'_{prop}$ bestimmt, in dem der existierende Wert für $w'_{prop}$ um den Wert $w_{y0}$ erhöht wird.

Wurde im Block 176 festgestellt, dass sich die x Position durch eine spätere Berechnung geändert hat, also ein neues Texel in der gleichen Reihe betrachtet wird, so werden zunächst der Index 1 und die Anzahl der bereits bearbeiteten Texel in dieser Reihe $x'_{num}$ inkrementiert. Ferner wird die Gewichtung für das neue Texel $w'_{tex}[1]$ auf $w'_{prop}[k]$ gesetzt, so dass die Gewichtungsbeiträge der vorhergehenden Texel weitergegeben werden.

Vom Block 180 geht das Verfahren dann zu Block 178, in dem dann eine entsprechende Gewichtung des neuen Texels auf die oben beschriebene Art und Weise durchgeführt wird.

Wurde die Berechnung der Gewichtung eines Texels im Block 178 abgeschlossen, so geht das Verfahren zu Block 182 in dem festgestellt wird, ob der Endpunkt des Streifens in einer anderen Reihe liegt als der Anfangspunkt. Ist dies der Fall, so geht das Verfahren zum Block 184 in dem ein neues Texel in einer neuen Reihe festgelegt wird, also verfahrenstechnisch in die nächste zu betrachtende Reihe gesprungen wird, so dass zunächst die Reihenanzahl $y'_{num}$, der Reihenindex k und der Texelindex 1 inkrementiert werden. Ferner wird die Texelanzahl $x'_{num}[k]$ neu auf den Wert 1 initialisiert und die Koordinate des ersten Texels in der neuen Reihe $x'_{ofs}$ wird bestimmt. Zusätzlich wird der Index für das $w_{tex}$-Array, bei dem das Gewicht für das erste Texel dieser Reihe gespeichert ist, festgelegt.

Vom Block 184 geht das Verfahren zum Block 186, in dem die Gewichtung für das zweite von dem Streifen getroffene Texel berechnet wird, ähnlich wie im Block 178, so dass auf die dortige Beschreibung verwiesen wird.

Nach dem Block 186 geht das Verfahren zum Block 188 in dem die x-Position der gerade betrachtete Streifen gespeichert wird und der Index n inkrementiert wird, um zum nächsten Streifen zu gelangen. Im Block 190 wird bestimmt, ob der Wert n kleiner ist als der Wert $n_{Stufe}$, und wenn dies nicht der Fall ist, wird festgestellt, dass der letzte Streifen überarbeitet wurde. In diesem Fall endet das Verfahren. Wird jedoch festgestellt, dass noch nicht der letzte Streifen bearbeitet wurde, geht das Verfahren zum Block 192, in dem die Koordinaten für den nächsten Streifen berechnet werden. Hierfür wird die Koordinate $u_x$ um den Wert $q_x$ erhöht, und ebenso wird die Koordinate $u_{y0}$ um den Wert $q_y$ erhöht. Die Fallunterscheidung bei der Betrachtung von $du_y$ berücksichtigt den in Fig. 9 bezüglich der Kanten $s_2$ und $s_3$

gezeigten Fall, gemäß dem der letzte Streifen nur die halbe Länge aufweist. Bei den Kanten $s_0$ und $s_1$ ist dies bereits der erste Streifen, was bereits bei der anfänglichen Initialisierung im Block 160 berücksichtigt wurde.

Basierend auf den im Block 192 festgelegten Daten werden im Block 194 die Texelkoordinaten des Anfangspunkts neu berechnet, und dann ein neuer Gewichtungsberechnungsdurchlauf für diesen Streifen durchgeführt.

Nachfolgend wird die in Fig. 1A im Block 114 angegebene Scheitelpunkt-Kanten-Verarbeitung näher beschrieben, welche die vertikalen Kanten behandelt, die hinzugefügt werden, um die vertikalen Zwischenräume auszufüllen.

Grundsätzlich stellen die Gewichtungstabellen für die Scheitelpunkt-Kanten die gleichen Parameter bereit, wie sie für die verschobenen Kanten herangezogen werden. Die Implementierung dieser Gewichtungstabellen ist jedoch weniger aufwendig, da die Anzahl der möglichen Reihen wesentlich niedriger ist, und die Indizierung der Gewichtungen und Reihen sich nicht unterscheiden, nachdem die Ausrichtung der betrachteten Kanten stets vertikal ist.

Die nachfolgende Tabelle gibt die Gewichtungen für die Scheitelpunkt-Kanten wieder.

| $y^*_{ofs}$ | y-Ganzzahlkoordinate der Texelzeile k = 0 |
|---|---|
| $x^*_{ofs}$ | x-Ganzzahlkoordinate der Texelreihe k = 0 |
| $y^*_{num}$ | Anzahl der Texelzeilen |
| $w^*_{tex}[k]$ | Texelgewichtung im Bereich von 0,0 bis 1,0 |
| $w^*_{prop}[k]$ | Gewichtungen für die Texel in dieser Reihe, welche rechts des gewichteten Texels liegen, welches am weitesten rechts angeordnet ist |

Der Vergrößerungszwischenraum g und der Stufenübertrag p werden zu der Gesamtlänge einer Scheitelpunkt-Kante addiert, wie dies in Fig. 10A dargestellt ist, so dass die Koordinaten (Anfangspunkt und Endpunkt) einer Scheitelpunkt-Kante gemäß der nachfolgenden Berechnungsvorschrift ergeben:

$$(y0, y1) = \begin{cases} \left( v^{\bullet}_{i,y} - p^{\bullet}_i, v^{\bullet}_{i,y} + g^{\bullet}_i \right) & \text{wenn } a^{\bullet}_{i,y} < 0 \\ \left( v^{\bullet}_{i,y} - g^{\bullet}_i, v^{\bullet}_{i,y} + p^{\bullet}_i \right) & \text{sonst} \end{cases}$$

$$x = v^{\bullet}_{i,x}$$

Die Kantenlänge ist g + p = 2 · r + p, mit max. Wert für r und p = 0,5. Aus der obigen Berechnungsvorschrift ergibt sich eine maximale Länge von 0,5 · 1,0 + 2 · 0,5 = 1,5, was die Anzahl von Texelreihen auf 3 begrenzt. Die Tabellenelemente für k = 0, 1, 2 für eine Scheitelpunkt-Kante i werden gemäß der nachfolgenden Berechnungsvorschrift bestimmt:

$$y_{int} = y^{\bullet}_{ofs} = \lfloor y \rfloor$$

$$y'_{int} = \lfloor y' \rfloor$$

$$x_{int} = x^{\bullet}_{ofs} = \lfloor x \rfloor$$

$$y^{\bullet}_{num} = y'_{int} - y_{int} + 1$$

$$w^{\bullet}_{prop}[k] = \min(y_{int} + k + 1, y') - \max(y_{int} + k, y)$$

$$w^{\bullet}_{tex}[k] = w^{\bullet}_{prop}[k] \cdot (x_{int} + 1 - x)$$

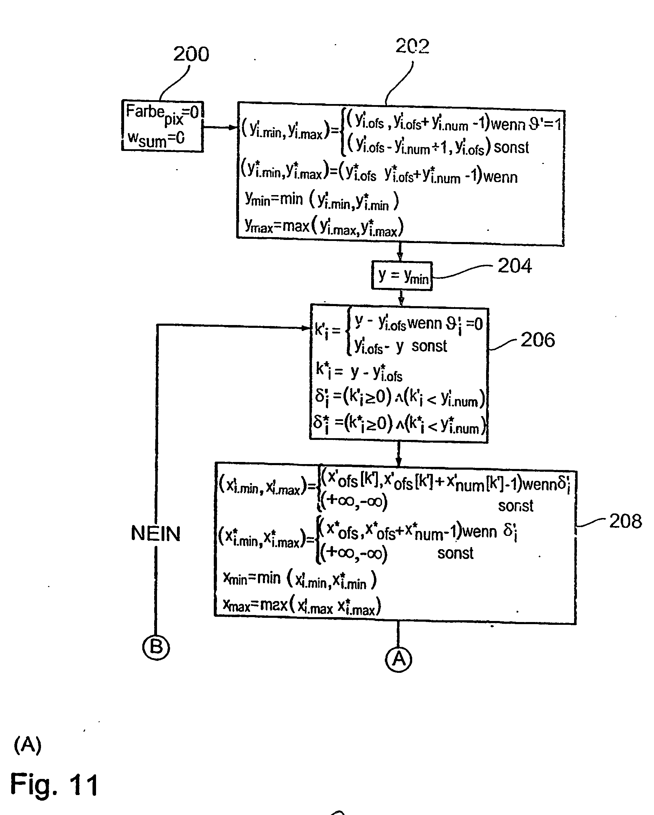

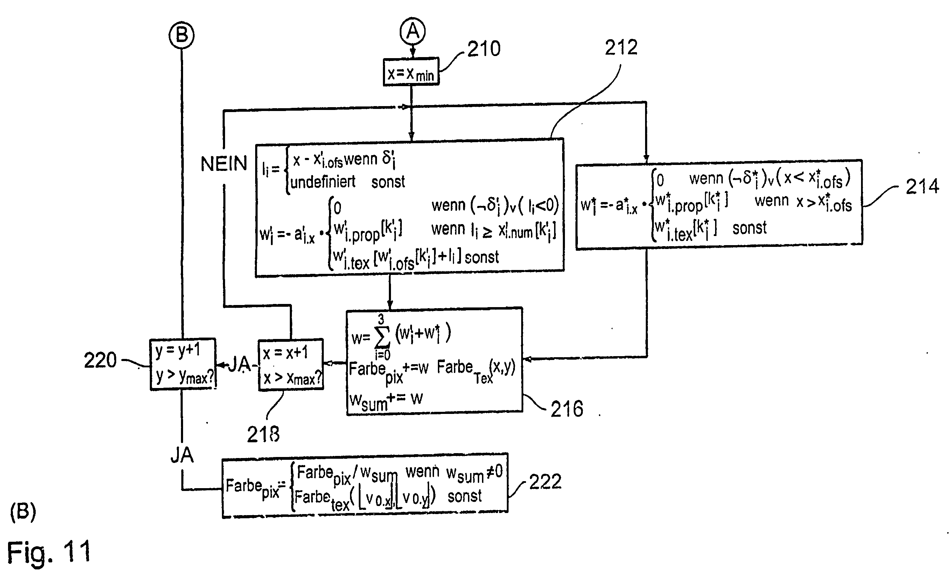

Nachdem nun alle Gewichtungstabellen für die entsprechenden Kanten, also die Scheitelpunkt-Kanten und die verschobenen Kanten bestimmt wurden, und gemäß Fig. 1B in den Blöcken 116 und 118 bereitgestellt werden, kann nun die abschlie-βende Farbberechnung gemäß Block 120 in Fig. 1B erfolgen. Nachfolgend wird ein Beispiel für den letzten, verbleibenden Verarbeitungsschritt aus Fig. 1, nämlich den Block 120 näher beschrieben. Diese Farbberechnung besteht hauptsächlich aus einer Schleife, welche die Datenstrukturen, welche auf die oben beschriebene Art und Weise für jede verschobene Kante und jede vertikale Kante erzeugt und gespeichert wurden, beurteilt. Genauer gesagt wird bei dieser Farbberechnung auf alle Texel Bezug genommen, welche durch den vergrößerten Footprint berührt oder überdeckt werden, für jedes dieser Texel wird eine Gewichtung bestimmt. Für ein Texel (x, y) berechnet sich der Gewichtungsfaktor w $\Sigma$ [0,0, 1.0] zu der Summe aller Kantenbeiträge, die aus den Gewichtungstabellen ausgelesen werden. Der Prozess zur Berechnung der sich ergebenden Pixelfarbe hängt im Detail von der das Pixel umgebenden Region ab, z. B. von der Organisation des Zugriffs auf den Texturspeicher. Nachfolgend wird ein funktionelles Beispiel für die Farbberechnungsprozedur anhand der Fig. 11 näher erläutert, wobei die in Fig. 11 dargestellte Prozedur eine Schleife ist, welche mehrfach durchlaufen wird, um alle betroffenen Texel abzuarbeiten. Hinsichtlich der Fig. 11 wird darauf hingewiesen, dass der Index i die Parallelität der angegebenen Rechnungen für vier Kanten beschreibt. Gleichungen, in denen i auf beiden Seiten des Gleichheitszeichens vorkommt, beschreiben vier Gleichungen, eine für jede Kante (i = 0, 1, 2, 3). i-indizierte Werte als Funktionsargument beschreiben vier Argumente. Der Index 1 gibt die durch eine Kante getroffenen Texel innerhalb einer Reihe an.

In Fig. 11A werden im Block 200 zunächst alle Farbkomponenten und die Summe aller Texelgewichte auf 0 initialisiert. Bei den Farbkomponenten handelt es sich im allgemeinen um RGB-Komponenten und die $\alpha$-Komponente, wobei die Gleichungen eine Berechnung nur für eine abstrakte Komponenten Farbe$_{pix}$ zeigen. Nachfolgend zu der Initialisierung der Farbkomponenten und der Summe aller Texelgewichte wird im Block 202 eine unterste und eine oberste Texelreihe bestimmt, wobei die kleinste und die größte y-Koordinate aller Texel, die durch die Werte in den oben beschriebenen zwei Tabellen beschrieben werden, ermittelt werden muss. Zunächst werden ein minimaler und ein maximaler Wert jeweils einer Kante ($y'_{i,min}$ und $y'_{i,max}$) bestimmt, und zwar aus der oben wiedergegebenen Tabelle betreffend die verschobenen Kanten. Durch die angegebene Gleichung werden acht Gleichungen beschrieben, nämlich für die Bestimmung von $y_{min}$ und $y_{max}$ für jeweils vier Kanten. Die angegebene Fallunterscheidung in der Zuweisung berücksichtigt, ob die Tabelle in Richtung steigender oder fallender y-Koordinaten aufgebaut wurde.

Ferner wird im Block 202 basierend auf der oben genannten Tabelle für die Scheitelpunkt-Kantenverarbeitung die minimalen und die maximalen Werte einer Kante $y^*_{i,min}$ und $y^*_{i,max}$ bestimmt. Anschließend wird aus den für die Scheitelpunkt-Kanten und die verschobenen Kanten bestimmten minimalen Werten acht minimale Werte $y_{min}$ bestimmt, und ebenso werden aus den bestimmten maximalen Werten für die verschobenen Kanten und die Scheitelpunkt-Kanten acht Maximalwerte $y_{max}$ bestimmt. Nachdem die Bestimmung der untersten und der obersten Texelreihe auf diese Art und Weise durchgeführt wurde, geht das Verfahren zum Block 204, in dem der Schleifenwert y, welcher eine Texel-Reihe beschreibt, auf den Wert $y_{min}$ initialisiert wird. Die Schleife wird für y Werte von $y_{min}$ bis $y_{max}$ durchlaufen.

Anschließend werden im Block 206 die in den oben beschriebenen Tabellen angegebenen Werte herangezogen, um die in diesen enthaltene Verschiebung zu kompensieren. So wird zunächst der Schleifenparameter $k'_i$ festgelegt, der für die verschobenen Kanten gilt. Die Werte der entsprechenden Tabelle enthalten lediglich Werte für $x_{num}$ Reihen, beginnend bei der ganzzahligen y Koordinate der Texelreihe 0 ($y_{ofs}$). Diese Verschiebung wird von dem Schleifenwert abgezogen, um den Reihenindex $k'_i$ innerhalb der Tabelle für die verschobenen Kanten zu erhalten. Ähnlich wie oben bezüglich des Blocks 202 beschrieben wurde, muss auch hier berücksichtigt werden, ob die zugrundeliegende Tabelle die y Koordinaten in aufsteigender oder absteigender Reihenfolge enthält.

Anschließend erfolgt eine entsprechende Entfernung der Verschiebung für die Werte aus der Scheitelpunkt-Kantentabelle, um so den Reihenindex $k^*_i$ zu erhalten. Ferner werden die Werte der Flags $\Delta'_i$ und $\Delta^*_i$ bestimmt, welche anzeigen, ob eine betrachtete Kante über dem aktuellen y liegt, also einem Beitrag zu den Texel-Gewichten liefern wird.

Anschließend werden im Block 208 das am meisten links liegende und das am meisten rechts liegende Texel in der betrachteten Reihe bestimmt. Für die aktuelle Reihe wird nun die kleinste und größte x-Koordinate aller Texel bestimmt, die durch die Tabellen gewichtet werden, also die x Koordinaten $x'_{i,min}$ und $x'_{i,max}$ für die verschobenen Kanten und die Koordinaten $x^*_{i,min}$ und $x^*_{i,max}$ für die Scheitelpunkt-Kanten. Kanten, die keinen Beitrag liefern, für die also die im Block 206 festgelegte Flag $\Delta^*_i$ oder $\Delta'_i$ 0 sind, werden bei der entsprechenden Bestimmung der minimalen und maximalen x Werte nicht berücksichtigt, was durch die $\pm$-$\infty$-Beiträge formal beschrieben ist.

Aus den für die verschobenen Kanten und die Scheitelpunkt-Kanten bestimmten minimalen x-Koordinaten wird dann der minimale Wert $x_{min}$ ausgewählt. Ebenso wird aus den für die verschobenen Kanten und die Scheitelpunkt-Kanten bestimmten maximalen x Koordinaten der maximale Wert $x_{max}$ ausgewählt. Anschließend geht das Verfahren zum Block 210 (Fig. 11B). Im Block 210 wird der Schleifenwert x, welcher ein Texel innerhalb der betrachteten Reihe angibt auf den Wert $X_{min}$ initialisiert. Dieser Schleifenwert läuft von $x_{min}$ bis $x_{max}$. Anschließend geht das Verfahren zum Block 212 in dem aus den bereitgestellten Tabellen die Gewichtungsbeiträge für die verschobenen Kanten ausgelesen werden. Hier werden die Beiträge aller acht Kanten zur Gewichtung des Texels bei den Koordinaten x, y bestimmt.

Zunächst wird der Index $l_i$ des Texels innerhalb der Reihe für eine entsprechende Kante betrachtet (siehe Fig. 7). Anschließend wird der Gewichtungsbeitrag $w'_i$ für die Verschobene-Kante betrachtet, wobei hier für jede Kante vier Fälle zu unterscheiden sind. Das Texel kann entweder oberhalb oder unterhalb der Kante liegen, wobei in diesem Fall der Wert $\Delta'_i$ 0 ist, so dass das betreffende Texel keinen Beitrag liefert. Ferner kann das Texel links von der Kante liegen, wobei in diesem Fall der Index 1 kleiner als 0 ist, und in diesem Fall auch kein Beitrag des Texels zu der Gesamtgewichtung geliefert wird. Liegt das Texel jedoch rechts von der Kante, also dass $1 \geq x_{num}$ ist, so wird der in der entsprechenden Tabelle bereitgestellte Wert $w'_{prop}$ gewählt. Liegt das Texel auf der Kante, so wird der in der Tabelle bereitgestellte Wert $w'_{tex}$ bereitgestellt. Der Faktor $a'_{i,x}$ negiert das Ergebnis für rechte Kanten.

Parallel zum Block 212 wird im Block 214 eine entsprechende Auslesung der Tabellen hinsichtlich der Gewichtungsbeiträge der Scheitelpunkt-Kanten durchgeführt, wobei auch hier der entsprechende Beitrag $w^*_i$ bestimmt wird. Wie im Block 212 gilt auch hier dass vier Fälle zu unterscheiden sind. Im ersten Fall liegt das Texel oberhalb oder unterhalb der Kante, der entsprechende Wert $\Delta^*_i$ ist somit 0. In diesem Fall liefert das Texel keinen Beitrag zur Gesamtgewichtung. Liegt das Texel links von der Kante, so trägt dieses ebenfalls nicht zur Gewichtung bei. Ist das Texel rechts von der Kante, $x > x^*_{i,ofs}$, so wird der in der Tabelle betreffend die Scheitelpunkt-Kanten festgelegte Wert $w^*_{prop}$ ausgewählt. Liegt das Texel auf der Kante, so wird der entsprechende Wert $w^*_{tex}$ ausgewählt. Auch hier wird das Ergebnis für rechte Kanten mittels des Faktors $a^*_{i,x}$ negiert.

Nachdem in den Blöcken 212 und 214 die jeweiligen Beiträge für die verschobenen Kanten und die Scheitelpunkt-Kanten zur Gewichtung bestimmt wurden, geht das Verfahren zum Block 216, in dem alle Beiträge summiert werden, und die Texelfarbe gewichtet wird. Zunächst werden die in den Blöcken 212 und 214 berechneten acht Beiträge aufsummiert, um den summierten Gewichtungswert w zu erhalten. Der so erhaltene Gewichtungswert w wird mit den Farbkomponenten $Farbe_{tex(x,y)}$ des Texels multipliziert und zur Farbe des Pixels $Farbe_{pix}$ addiert. Für eine spätere Normalisierung der Farbe wird ferner die Gesamtsumme $w_{sum}$ der Texelgewichtungen durchgeführt. Genauer gesagt wird der Wert $w_{sum}$ um den im Block 216 bestimmten Wert w erhöht.

Anschließend geht das Verfahren zum Block 218, in dem zum einen der Schleifenwert x um 1 inkrementiert wird und ferner bestimmt wird, ob der Wert x den maximalen Wert $x_{max}$ überschreitet. Ist dies nicht der Fall, so sind noch zu bearbeitende Texel in der betrachteten Reihe enthalten, und das Verfahren geht vom Block 218 zurück zu den Blöcken 212 und 214. Es erfolgt folglich ein Sprung um ein Texel nach rechts, und eine entsprechende Überarbeitung bezüglich dieses Texels wird durchgeführt. Wird im Block 218 bestimmt, dass alle Texel einer Reihe abgearbeitet wurden, so geht das Verfahren zum Block 220, in dem der Schleifenwert y und 1 inkrementiert wird und überprüft wird, ob der Schleifenwert y den maximalen y Wert $y_{max}$ übersteigt. Ist dies nicht der Fall, so wird in die nächste Reihe gesprungen, und das Verfahren geht zurück zum Block 206. Wird festgestellt, dass die letzte Texelreihe bearbeitet wurde, so geht das Verfahren vom Block 220 zum Block 222. Im Block 222 wird dann die tatsächliche Farbe des Pixels $Farbe_{pix}$ bestimmt, wobei für den Fall, dass eine Gewichtung existiert, also $w_{sum}$ ungleich 0 ist, was anzeigt, dass zumindest ein Texel durch die betrachtete Kante berührt wurde, der Farbpixelwert basierend auf der summierten Gewichtung $w_{sum}$ normalisiert wird, also $Farbe_{pix/sum}$ festgelegt wird. Bei einer sogenannten Nullgewichtung, wenn also der Footprint zu einem Punkt entartet und eine Vergrößerungsverschiebung einen Wert von 0 aufweist wird die Farbe des Texels unter dem Scheitelpunkt 0 des Footprints unverändert übernommen (nächstliegendes Filter). Dies bedeutet, dass das Texel was am nächsten zu den Punktkoordinaten liegt ausgewählt wird und eine konstante Gewichtung von 1,0 zugeordnet bekommt.

Obwohl die vorliegende Erfindung bei der obigen Beschreibung der bevorzugten Ausführungsbeispiele auf der Grundlage eines Footprints mit vier Seiten beschrieben wurde, kann der erfindungsgemäße Ansatz grundsätzlich auf beliebige Footprints erweitert werden.

Ferner wird darauf hingewiesen, dass die vorliegende Erfindung nicht auf die obigen Ausführungsbeispiele beschränkt ist, bei denen eine anfängliche Vergrößerung des Footprints durchgeführt wurde. Ist keine solche Vergrößerung erwünscht, ist dem empfangenen Footprint z.B. keine Vergrößerungsverschiebung zugeordnet, so arbeitet das erfindungsgemäße Verfahren bezüglich des ursprünglichen Footprints und führt bei diesem zu einer beschleunigten Verarbeitung desselben, aufgrund der erfindungsgemäßen Schritte zur Auffindung von Texeln unter Kanten.

**Patentansprüche**

1. Graphikverfahren zur Festlegung von Gewichtungsfaktoren für die Farbberechnung eines Farbwertes ($Farbe_{pix}$) von Texeln für einen Footprint, der eine Mehrzahl von Texeln in einem Texel-Gitter überdeckt, mit folgenden Schritten:

(a) Bestimmen einer Forminformation ($v_i$) des Footprints;

(b) Bestimmen der Kanten ($s_i$) des Footprints;

(c) Bestimmen der Texel des Texel-Gitters, die durch die Kanten des Footprint berührt werden; und

(d) Bestimmen eines Gewichtungsfaktors ($w'_{tex}$, $w'_{prop}$) für jedes Texel, abhängig von der durch den Footprint überdeckten Teilfläche des jeweiligen Texels;

**dadurch gekennzeichnet, daß**

die im Schritt (b) bestimmten Kanten ($s_i$) durch eine Treppenfunktion angenähert werden;

im Schritt (c) die Texel bestimmt werden, die durch die Treppenfunktion berührt werden; und

im Schritt (d) ein Gewichtungsfaktor ($w'_{tex}$, $w'_{prop}$) für jedes Texel bestimmt wird, das einen Abschnitt der Treppenfunktion enthält.

2. Verfahren nach Anspruch 1, bei dem ein durch die Treppenfunktion berührtes Texel basierend auf den Anfangspunkten und/oder Endpunkten der vertikalen Abschnitte der Treppenfunktion bestimmt werden.

3. Verfahren nach Anspruch 1 oder 2, bei dem im Schritt (d) den Texeln des Texel-Gitters, die nicht durch die Treppenfunktion berührt werden und die von dem Footprint bedeckt werden, ein einheitlicher Gewichtungswert zugeordnet werden.

4. Verfahren nach einem der Ansprüche 1 bis 4, bei dem im Schritt (d) die Gewichtungsfaktoren für jedes Texel einer Datenstruktur zugeordnet werden.

5. Verfahren nach einem der Ansprüche 1 bis 4, bei dem die Treppenfunktion für jede Kante des Footprints eine Mehrzahl von Stufen ($n_{i,Stufe}$), eine Mehrzahl von horizontalen Stufenelementen und eine Mehrzahl von vertikalen Stufenelementen umfaßt,

wobei jede Kante eine Mehrzahl von gleichlangen, aufeinanderfolgenden Kantenabschnitten ($q_i$) umfaßt;

wobei eine horizontale Kante vorliegt, wenn die Endpunkte der Kantenabschnitte ($q_i$) der Kante ein horizontales Stufenelement der Treppenfunktion schneiden;

wobei eine vertikale Kante vorliegt, wenn die Endpunkte der Kantenabschnitte ($q_i$) der Kante ein vertikales Stufenelement der Treppenfunktion schneiden;

wobei eine horizontale Kante eine Anzahl von vertikalen Stufenelementen umfaßt, die gleich der Anzahl der Stufen ($n_{i,Stufe}$) der Treppenfunktion ist;

wobei eine vertikale Kante eine Anzahl von vertikalen Stufenelementen umfaßt, die um eine zusätzliches vertikalen Stufenelement größer als die Anzahl der Stufen ($n_{i,Stufe}$) der Treppenfunktion ist; und

wobei das zusätzliche vertikale Stufenelement für eine Berechnung der Gewichtungsfaktoren einer benachbarten Kante mit gleicher vertikaler Position herangezogen wird.

6. Verfahren nach einem der Ansprüche 1 bis 5, bei dem das Bestimmen der Teilfläche eines Texels nach Schritt (d) das Bestimmen der durch die Treppenfunktion festgelegten und von dem Footprint überdeckten Texelteilfläche umfaßt.

7. Verfahren nach Anspruch 6, bei dem der im Schritt (d) bestimmte Gewichtungsfaktor ($w'_{tex}$, $w'_{prop}$, $w^*_{tex}$, $w^*_{prop}$) durch das Verhältnis der Texelteilfläche zu der Texelgesamtfläche bestimmt ist.

8. Verfahren nach einem der Ansprüche 1 bis 7, bei dem dem Footprint eine Vergrößerungsverschiebung (r) zugeordnet ist,

wobei nach dem Schritt (a), basierend auf der Vergrößerungsverschiebung (r), der Footprint durch Verschieben der Kanten ($s_i$) des Footprints nach außen um eine von der Vergrößerungsverschiebung (r) abhängige Entfernung vergrößert wird;

wobei im Schritt (b) die verschobene Kante ($s'_i$) bestimmt wird;

wobei die verschobene Kante ($s'_i$) durch eine Treppenfunktion angenähert wird; und

wobei im Schritt (d) ein Gewichtungsfaktors ($w'_{tex}$, $w'_{prop}$) für jedes Texel, das eine verschobene Kante ($s'_i$) enthält, abhängig von der durch den vergrößerten Footprint überdeckten Teilfläche des jeweiligen Texels bestimmt wird.

9. Verfahren nach Anspruch 8, bei dem die sich aufgrund der Vergrößerung des Footprints einstellenden Zwischenräume ($g^*_i$) durch horizontale und vertikale Kanten gefüllt werden.

10. Verfahren nach Anspruch 9, bei dem im Schritt (d) ferner Gewichtungsfaktoren ($w^*_{tex}$, $w^*_{prop}$) für jedes Texel, das eine eingebrachte vertikale Kante enthält, bestimmt werden, abhängig von einem durch den vergrößerten Footprint überdeckten Teilbereich des jeweiligen Texels.

11. Verfahren nach einem der Ansprüche 8 bis 10, bei dem das Vergrößern des Footprints das Verschieben der Kantenendpunkte ($v_i$) um durch die Vergrößerungsverschiebung (r) festgelegte gleiche Entfernungen in horizontaler Richtung und in vertikaler Richtung umfaßt.

12. Verfahren nach einem der Ansprüche 1 bis 11, bei dem die Gewichtungsfaktoren für alle Kanten des Footprints parallel erzeugt werden.

**Claims**

1. Graphics method for determining weighting factors for the color calculation of a color value ($color_{pix}$) of texels for a footprint covering a plurality of texels in a texel grid, the method comprising:

    (a) determining form information ($\mathbf{v_i}$) of the footprint;
    (b) determining the edges ($\mathbf{s_i}$) of the footprint;
    (c) determining the texels of the texel grid contacted by the edges of the footprint; and
    (d) determining a weighting factor ($w'_{tex}$, $w'_{prop}$) for each texel depending on the subarea of the respective texel covered by the footprint;

    **characterized in that**
    the edges ($\mathbf{s_i}$) determined in step (b) are approximated by a staircase function;
    the texels contacted by the staircase function are determined in step (c); and
    a weighting factor ($w'_{tex}$, $w'_{prop}$) for each texel containing a portion of the staircase function is determined in step (d).

2. Method according to claim 1, wherein a texel contacted by the staircase function is determined based on the starting points and/or end points of the vertical portions of the staircase function.

3. Method according to claims 1 or 2, wherein in step (d) a uniform weighting value is associated with the texels of the texel grid not contacted by the staircase function and covered by the footprint.

4. Method according to one of claims 1 to 3, wherein in step (d) the weighting factors for each texel are associated with a data structure.

5. Method according to one of claims 1 to 4, wherein the staircase function for each edge of the footprint includes a plurality of steps ($n_{i,step}$), a plurality of horizontal step elements and a plurality of vertical step elements,
   wherein each edge includes a plurality of subsequent edge portions of equal length ($\mathbf{q_i}$);
   wherein a horizontal edge is present when the end points of the edge portions ($\mathbf{q_i}$) of the edge intersect a horizontal step element of the staircase function;
   wherein a vertical edge is present when the end points of the edge portions ($\mathbf{q_i}$) of the edge intersect a vertical step element of the staircase function;
   wherein a horizontal edge includes a number of vertical step elements, the number being equal to the number of steps ($n_{i,step}$) of the staircase function;
   wherein a vertical edge includes a number of vertical step elements, the number being larger than the number of the steps ($n_{i,step}$) of the staircase function by an additional vertical step element; and
   wherein the additional vertical step element is used for calculating the weighting factors of a neighboring edge having the same vertical position.

6. Method according to one of claims 1 to 5, wherein determining the subarea of the texel, following step (d), includes determining the texel subarea determined by the staircase function and covered by the footprint.

7. Method according to claim 6, wherein the weighting factor ($w'_{tex}$, $w'_{prop}$, $w^*_{tex}$, $w^*_{prop}$) determined in step (d) is determined by the ratio of the texel subarea to the texel overall area.

8. Method according to one of claims 1 to 7, wherein an enlargement offset (r) is associated with the footprint,
   wherein following step (a), based on the enlargement offset (r), the footprint is enlarged by offsetting the edges ($\mathbf{s_i}$) of the footprint to the outside by a distance depending on the enlargement offset (r);

wherein the offset edge ($\mathbf{s'_i}$) is determined in step (b);
wherein the offset edge ($\mathbf{s'_i}$) is approximated by a staircase function; and
wherein in step (d) a weighting factor ($w'_{tex}$, $w'_{prop}$) for each texel containing an offset edge ($s'_i$) is determined depending on the subarea of the respective texel covered by the enlarged footprint.

**9.** Method according to claim 8, wherein the gaps ($g^*_i$) resulting due to the enlargement of the footprint are filled by horizontal and vertical edges.

**10.** Method according to claim 9, wherein in step (d) also weighting factors ($w^*_{tex}$, $w^*_{prop}$) for each texel containing an incorporated vertical edge are determined depending on a subarea of the respective texel covered by the enlarged footprint.

**11.** Method according to one of claims 8 to 10, wherein enlarging the footprint includes offsetting the edge end points ($\mathbf{v_i}$) in the horizontal direction and the vertical direction by the same distances determined by the enlargement offset (r).

**12.** Method according to one of claims 1 to 11, wherein the weighting factors for all the edges of the footprint are produced in parallel.

**Revendications**

**1.** Procédé graphique pour déterminer des facteurs de pondération pour le calcul de couleur d'une valeur de couleur ($Farbe_{pix}$) de texels d'une empreinte couvrant une pluralité de texels dans une grille de texels, aux étapes suivantes consistant à :

(a) déterminer une information de forme ($v_i$) de l'empreinte ;
(b) déterminer les bords ($s_i$) de l'empreinte ;
(c) déterminer les texels de la grille de texels avec lesquels viennent en contact les bords de l'empreinte ; et
(d) déterminer un facteur de pondération ($w'_{tex}$, $w'_{prop}$) pour chaque texel, en fonction de la surface partielle du texel respectif couverte par l'empreinte ;

**caractérisé par le fait que**
les bords ($s_1$) déterminés à l'étape (b) sont approchés par une fonction d'escalier ;
à l'étape (c) sont déterminés les texels avec lesquels vient en contact la fonction d'escalier ; et
à l'étape (d) est déterminé un facteur de pondération ($W'_{tex}$, $w'_{prop}$) pour chaque texel contenant un segment de la fonction d'escalier.

**2.** Procédé selon la revendication 1, dans lequel un texel avec lequel vient en contact la fonction d'escalier est déterminé sur base des points de début et/ou des points de fin des segments verticaux de la fonction d'escalier.

**3.** Procédé selon la revendication 1 ou 2, dans lequel est associée, à l'étape (d), aux texels de la grille de texels avec lesquels ne vient pas en contact la fonction d'escalier et qui sont couverts par l'empreinte une valeur de pondération unitaire.

**4.** Procédé selon l'une des revendications 1 à 4, dans lequel, à l'étape (d), les facteurs de pondération pour chaque texel sont associés à une structure de données.

**5.** Procédé selon l'une des revendications 1 à 4, dans lequel la fonction d'escalier comporte, pour chaque bord de l'empreinte, une pluralité d'étages ($n_{i,stufe}$), une pluralité d'éléments d'étage horizontaux et une pluralité d'éléments d'étage verticaux,
chaque bord comportant une pluralité de segments de bord successifs de même longueur ($q_i$) ;
un bord horizontal étant présent lorsque les points de fin des segments de bord ($q_i$) du bord coupent un élément d'étage horizontal de la fonction d'escalier ;
un bord vertical étant présent lorsque les points de fin des segments de bord ($q_i$) du bord coupent un élément d'étage vertical de la fonction d'escalier ;
un bord horizontal comportant un nombre d'éléments d'étage verticaux qui est égal au nombre d'étages ($n_{i,stufe}$) de la fonction d'escalier ;
un bord vertical comportant un nombre d'éléments d'étage verticaux qui est supérieur d'un élément d'étage vertical additionnel au nombre d'étages ($n_{i,stufe}$) de la fonction d'escalier ; et
l'élément d'étage vertical additionnel étant utilisé pour un calcul des facteurs de pondération d'un bord adjacent de même position verticale.

6. Procédé selon l'une des revendications 1 à 5, dans lequel la détermination de la surface partielle d'un texel comporte, après l'étape (d), la détermination de la surface partielle de texel fixée par la fonction d'escalier et couverte par l'empreinte.

7. Procédé selon la revendication 6, dans lequel le facteur de pondération ($w'_{tex}$, $w'_{prop}$, $w^*_{tex}$, $w^*_{prop}$) déterminé à l'étape (d) est déterminé par le rapport entre la surface partielle de texel et la surface totale de texel.

8. Procédé selon l'une des revendications 1 à 7, dans lequel est associé à l'empreinte un décalage d'agrandissement ($r$), après l'étape (a), l'empreinte étant agrandie, sur base du décalage d'agrandissement ($r$), par déplacement des bords ($s_i$) de l'empreinte vers l'extérieur d'une distance fonction du décalage d'agrandissement ($r$) ;
à l'étape (b) étant déterminé le bord déplacé ($s'_i$) ;
le bord déplacé ($s'_i$) étant approché par une fonction d'escalier ; et
à l'étape (d) étant déterminé un facteur de pondération ($w'_{tex}$, $w'_{prop}$) pour chaque texel contenant un bord déplacé ($s'_i$), en fonction de la surface partielle du texel respectif couverte par l'empreinte agrandie.

9. Procédé selon la revendication 8, dans lequel les espaces intermédiaires ($g^*_i$) créés par suite de l'agrandissement de l'empreinte sont remplis par des bords horizontaux et verticaux.

10. Procédé selon la revendication 9, dans lequel sont déterminés, à l'étape (d), par ailleurs des facteurs de pondération ($w^*_{tex}$, $w^*_{prop}$) pour chaque texel contenant un bord vertical incorporé, en fonction de la zone partielle du texel respectif couverte par l'empreinte agrandie.

11. Procédé selon l'une des revendications 8 à 10, dans lequel l'agrandissement de l'empreinte comporte le décalage des points de fin de bord ($v_i$) de distances identiques fixées par le décalage d'agrandissement ($r$) dans la direction horizontale et dans la direction verticale.

12. Procédé selon l'une des revendications 1 à 11, dans lequel les facteurs de pondération pour tous les bords de l'empreinte sont générés en parallèle.

$$\text{Eingabe} \quad \text{---100}$$

Footprintdaten $\vec{v}_i$ in
Drehrichtung d
Vergrößerungsverschiebung r ---102

Kantenberechnung ---104

Attribute $\vec{v}_i^*, \vec{a}_i^*, \vec{g}_i^*$
der Scheitelpunktkante

106

Attribute $\vec{v}_i', \vec{s}_i', \vec{a}_i'$
der verschobenen
Kante ---108

Verarbeitung
der verschobenen
Kante ---110

Stufe $p_i^*$

112

Verarbeitung
der Scheitel-
punkt-Kante

114

(A)

(A)   (B)

# Fig. 1

EP 1 537 538 B1

```
        (A)                              (B)

116 —    Gewichtungstabellen für         Gewichtungstabellen für    — 118
         Scheitelpunkt-Kanten            verschobene Kanten


         Textur              →    Farbberechnung         — 120

122

                                 Pixelfarbe              — 124

                                 Ausgabe                 — 126
```

Fig. 2

oben links
(horizontale Schritte)

oben rechts
(vertikale Schritte)

unten links
(vertikale Schritte)

unten rechts
(horizontale Schritte)

Fig. 3

Fig.4 (A)

(A)

Fig. 4

(A)

(B)

Fig. 5

horizontale
Stufe

vertikale
Stufe

$\vec{v}_1'$

$\vec{q}_1$

$\vec{u}_{1,0}$ $\vec{u}_{1,1}$

$\vec{v}_0'$

Scheibe

① 

② 

# Fig. 6

① Stufenübertrag

② Vergrößerungszwischenraum

Fig. 7

(A)

# Fig. 8

**(B)**

## Fig. 8

(A) → 176

176: $x_{int} \neq x_{prev}$?

— JA → 180:
$x'_{num}[k]++, l++$
$w'_{tex}[l] = w'_{prop}[k]$

— NEIN ↓

178:
$u_{y1} = u_{y0} + du_y$
$y1_{int} = \lfloor u_{y1} \rfloor$
$w_x = 1 - fract(u_x)$
$$w_{int} = \begin{cases} fract(u_y) & wenn\ (y0_{int} \neq y1_{int}) \wedge (\vartheta'=0) \\ 1 - fract(u_{y0}) & wenn\ (y0_{int} \neq y1_{int}) \wedge (\vartheta'=1) \\ |du_y| & sonst \end{cases}$$
$w'_{tex}[l] += w_x \cdot w_{y0}$
$w'_{prop}[k] += w_{y0}$

↓ 182: $y0_{int} \neq y1_{int}$?

— JA → 184:
$y'_{num}++, k++, l++$
$x'_{num}[k] = 1$
$x'_{ofs}[k] = x_{int}$
$w'_{ofs}[k] = l$

↓ 186:
$$w_{y1} = \begin{cases} fract(u_{y1}) & wenn\ \vartheta'=1 \\ 1 - fract(u_{y1}) & sonst \end{cases}$$
$w'_{tex}[l] = w_x \cdot w_{y1}$
$w'_{prop}[k] = w_{y1}$

— NEIN ↓

188: $x_{prev} = x_{int}$
$n++$

← ← ← 190: $n < n_{step}$?

— JA ↑ 192:
$u_x += q_x$
$u_{y0} += q_y$
$$du_y = \begin{cases} q_y/2 & wenn\ (\vartheta'=1) \wedge (a_y < 0) \wedge (n = n_{step}-1) \\ q_y & sonst \end{cases}$$

194:
$x_{int} = \lfloor u_x \rfloor$
$y0_{int} = \lfloor u_{y0} \rfloor$

— NEIN ↓

Fig. 9

(A)

(B)

Fig. 10

(A)

# Fig. 11

EP 1 537 538 B1

Ⓑ      Ⓐ     210      212

$$x = x_{min}$$

NEIN

$$l_i = \begin{cases} x - x^l_{i.ofs} & \text{wenn } \delta^l_i \\ \text{undefiniert} & \text{sonst} \end{cases}$$

$$w^l_i = a^l_{i.x} \cdot \begin{cases} 0 & \text{wenn } (\neg\delta^l_i) \vee (l_i < 0) \\ w^l_{i.prop}[k^l_i] & \text{wenn } l_i \geq x^l_{i.num}[k^l_i] \\ w^l_{i.tex}[w^l_{i.ofs}[k^l_i] + l_i] & \text{sonst} \end{cases}$$

$$w^*_i = a^*_{i.x} \cdot \begin{cases} 0 & \text{wenn } (\neg\delta^*_i) \vee (x < x^*_{i.ofs}) \\ w^*_{i.prop}[k^*_i] & \text{wenn } x > x^*_{i.ofs} \\ w^*_{i.tex}[k^*_i] & \text{sonst} \end{cases}$$

214

$$w = \sum_{i=0}^{3}(w^l_i + w^*_i)$$

$$Farbe_{pix} += w\, Farbe_{Tex}(x,y)$$

$$w_{sum} += w$$

216

220    $y = y+1$   $y > y_{max}?$   JA   $x = x+1$   $x > x_{max}?$

218

JA

$$Farbe_{pix} := \begin{cases} Farbe_{pix}/w_{sum} & \text{wenn } w_{sum} \neq 0 \\ Farbe_{tex}(\lfloor v_{0.x}\rfloor, \lfloor v_{0.y}\rfloor) & \text{sonst} \end{cases}$$

222

(B)

Fig. 11